# EUROPÄISCHE PATENTSCHRIFT

(11) **EP 3 339 887 B1**
(45) Veröffentlichungstag und Bekanntmachung des Hinweises auf die Patenterteilung: **03.04.2019**
(21) Anmeldenummer: 16206062.8
(22) Anmeldetag: 22.12.2016
(51) Int. Cl.: G01S 17/08, H04B 10/69, G01S 7/486, G01J 1/44, G01S 17/89, G01S 7/497

(54) **LICHTEMPFÄNGER MIT EINER VIELZAHL VON LAWINENPHOTODIODEN UND VERFAHREN ZUM ERFASSEN VON LICHT**
LIGHT RECEIVING DEVICE WITH A PLURALITY OF AVALANCHE PHOTODIODES AND METHOD FOR LIGHT DETECTION
RÉCEPTEUR DE LUMIÈRE COMPRENANT UNE PLURALITÉ DE PHOTODIODES À AVALANCHE ET PROCÉDÉ DE DÉTECTION DE LUMIÈRE

(43) Veröffentlichungstag der Anmeldung: 27.06.2018
(73) Patentinhaber: Sick AG, 79183 Waldkirch (DE)
(72) Erfinder: Seitz, Stefan, 79341 Kenzingen (DE)

(56) Entgegenhaltungen:
- US-A1- 2011 240 865
- US-A1- 2013 153 754

## Beschreibung

Die Erfindung betrifft einen Lichtempfänger mit einer Vielzahl von Lawinenphotodiodenelementen und ein Verfahren zum Erfassen von Licht nach dem Oberbegriff von Anspruch 1 beziehungsweise 11.

Ein Lichtempfänger hat die Funktion, aus einfallendem Empfangslicht ein elektrisches Signal zu erzeugen. Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung (Breakdownvoltage) vorgespannt (Bias), so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPADs (Single-Photon Avalanche Diode) bezeichnet.

Die hohe Strahlungsempfindlichkeit von SPADs wird in vielen Anwendungen genutzt. Dazu zählen die Medizintechnik mit CT, MRT oder Blutanalysen, die optische Messtechnik einschließlich Spektroskopie, Entfernungsmessung und dreidimensionaler Bildgebung, die Strahlendetektion in der Kernphysik oder die Verwendungen in Teleskopen für die Astrophysik.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 5 bis 100 ns unempfindlich und fällt solange für weitere Messungen aus. Deshalb ist es üblich, mehrere SPADs zusammenzuschalten und statistisch auszuwerten.

Die Durchbruchspannung ist die minimale benötigte Vorspannung zur Aufrechterhaltung des gewünschten Geiger-Modus für ein SPAD. Genaugenommen sind jedoch bei diesem Grenzwert die Detektions-Effizienz und die Verstärkung immer noch Null. Erst wenn die Vorspannung die Durchbruchspannung übersteigt, werden einfallende Photonen in entsprechende Geigerstromimpulse umgesetzt. Bei eine idealen Photonen-Detektions-Effizienz (PDE) von 100% würde jedes einfallende Photon einen Geigerstromimpuls auslösen. Praktisch gelingt das nicht vollständig. Die PDE kann jedoch über die Höhe der angelegten Vorspannung beeinflusst werden.

Um den Arbeitspunkt der SPADs und entsprechend auch deren Auslöseempfindlichkeit über eine von außen bereitgestellte Vorspannung einzustellen, werden die anoden- und kathodenseitigen Anschlüsse der einzelnen SPAD-Zellen des Lichtempfängers direkt herausgeführt. Dadurch sind alle SPADs mit einer gemeinsamen Vorspannugn betrieben. Anstelle der Vorspannung wird meist nur die Überspannung, also die Differenz aus Vorspannung und Durchbruchspannung betrachtet. Die Auslösewahrscheinlichkeit steigt mit der Überspannung. Dabei gibt es in der Praxis eine sinnvolle obere Grenze, weil die Auslösewahrscheinlichkeit bei höheren Überspannungen in Begrenzung geht und unerwünschte Rauschanteile überproportional mit ansteigen. Der mittels Überspannung eingestellte Arbeitspunkt ermöglicht eine gewisse Anpassung des Lichtempfängers, wird aber vielen Situationen mit stark unterschiedlichen oder auch zeitlich schwankenden Empfangslichtverhältnissen nicht gerecht.

Dann führen größere Lichtleistungen, sei es durch Nutzlicht oder Fremdlicht, zu Übersättigungseffekten einzelner Pixel oder ganzer Bereiche. Gerade wenn ein großer Dynamikbereich abgedeckt werden soll, können so wichtige Informationen über das Empfangslicht verloren gehen. Herkömmlich wird versucht, solche Situationen durch geeignetes Optikdesign mit Optikkomponenten wie Linsen, Blenden und Filter zu vermeiden und den Lichteinfall auf dem Lichtempfänger zu optimieren. Einige mögliche Ziele einer solchen optimierten Auslegung sind konstante Empfangslichtmengen und damit Empfangssignalverläufe unabhängig von Abstand und Winkel eines erfassten Objekts, eine exakt einjustierte Lage eines Empfangslichtflecks auf dem Lichtempfänger, Vermeidung von übersteuernden energetischen "Hotspots" innerhalb des Empfangslichtflecks oder das Abschirmen des Lichtempfängers vor Streu- beziehungsweise Fremdlicht. Da diese Ziele oft miteinander konkurrieren und zumindest nicht kostengünstig gemeinsam erreichbar sind, wird eine Vielzahl von Gerätevarianten je nach Anwendungszweck angeboten.

Eine zuverlässige Detektion in einem Lichtempfänger hängt aber auch noch davon ab, dass die interne Information, in diesem Fall der Geigerstrom, möglichst verlust-und verzerrungsfrei ausgelesen werden kann. Herkömmliche Ausleseschaltungen sind jedoch langsam, können also mit hochfrequenten Signalen nicht umgehen. Außerdem werden Ströme von Fremdlicht oder gar reinen Störereignissen wie Dunkelrauschen ebenso ausgelesen wie das eigentliche Nutzsignal.

Die WO 2011/117309 A2 schlägt vor, neben der Anode und Kathode für das Anlegen der Vorspannung eine dritte Elektrode an dem SPAD-Detektor vorzusehen, über welche der Geigerstrom kapazitiv ausgekoppelt wird. Dadurch soll verhindert werden, dass das Auslesen durch Schaltelemente der Vorspannung verzögert wird. Mit dem eigentlichen Auslesen befasst sich das Dokument aber nicht. Eine verbesserte Anpassung des Lichtempfängers an Umgebungs- oder Anwendungsbedingungen ist dadurch ohnehin nicht gegeben.

Die US 2013/0153754 A1 offenbart eine Vorrichtung zur Abstandsmessung nach einem Lichtlaufzeitverfahren mit einem Lichtempfänger, der eine Vielzahl von SPADs aufweist. Dabei soll die Leistungsaufnahme begrenzt werden, indem nur ein Teil der SPADs tatsächlich mit einer Vorspannung oberhalb der Durchbruchspannung versorgt wird. Dazu weist die Hochspannungsversorgung mehrere Leitungen auf, die jeweils mit einzelnen oder Gruppen SPADs verbunden sind. Mittels einer Umschaltsteuereinheit kann selektiv entschieden werden, welche der Leitungen die Hochspannung übertragen.

Aus der US 2011/0240865 A1 ist ein Lichtsensor mit hohem Dynamikbereich bekannt. Die Pixel des Lichtsensors sind als SPADs ausgebildet. Eine Steuerung überwacht die Intensität des einfallenden Lichts. Wenn es zu schwach ist, wird von einem linearen Modus in einen Geiger-Modus gewechselt, indem die SPADs mit einer Vorspannung oberhalb der Durchbruchspannung betrieben werden. Bei zu starkem Licht wird umgekehrt in den linearen Modus umgeschaltet. Die jeweils benötigte Vorspannung wird von einer Vorspannungseinheit bereitgestellt.

Es ist daher Aufgabe der Erfindung, die Erfassung mit einem gattungsgemäßen Lichtempfänger zu verbessern.

Diese Aufgabe wird durch einen Lichtempfänger mit einer Vielzahl von Lawinenphotodiodenelementen und ein Verfahren zum Erfassen von Licht nach Anspruch 1 beziehungsweise 11 gelöst. Wird an die Lawinenphotodiodenelemente eine Vorspannung oberhalb der Durchbruchspannung angelegt, so arbeiten sie im Geiger-Modus. Die Lawinenphotodiodenelemente sind zu Gruppen zusammengefasst. Dabei kann es sich um jeweils einige Lawinenphotodiodenelemente handeln, die dann gemeinsam ein Pixel mit einer gewissen Statistik zum Ausgleich der einleitend beschriebenen Anfälligkeit für einzelne Störereignisse mit anschließender Totzeit bilden. Ebenso denkbar sind größere Gruppen, die ganze Bereiche des Lichtempfängers bilden oder deren Lawinenphotodiodenelemente musterartig über Bereiche des Lichtempfängers verteilt sind, oder Gruppen, die nur aus einem einzigen Lawinenphotodiodenelement bestehen.

Die Erfindung geht nun von dem Grundgedanken aus, solchen Gruppen durch elektronische Ansteuerung unterschiedliche Empfindlichkeitseigenschaften zu geben, also eine Art elektronische Blende in Analogie zu einer optomechanischen Blende zu erzeugen. Dazu kann am Eingang und/oder am Ausgang der Lawinenphotodiodenelemente eingegriffen werden, nämlich durch Anpassung der Vorspannung beziehungsweise eine Auswahl beim Auslesen. Beides hat eigene Vorteile, beispielsweise ermöglicht eine Anpassung der Vorspannung eine auch nur graduelle Anpassung der Empfindlichkeit, während dafür die Auswahl beim Auslesen extrem schnell und damit besonders hochfrequenztauglich ist.

Für eine lokale Anpassung der Vorspannung und damit der Detektionsempfindlichkeit stehen auf dem Lichtempfänger mehrere unterschiedliche Vorspannungen zur Verfügung, die von außen oder durch eine Schaltung des Lichtempfängers an Vorspannungsanschlüssen für die Lawinenphotodiodenelemente bereitgestellt werden. Indem eine Gruppe von jeweils einem der Vorspannungsanschlüsse versorgt wird, werden die zugehörigen Lawinenphotodiodenelemente mit einer der unterschiedlichen Vorspannungen versorgt, und daher sind die Gruppen unterschiedlich empfindlich. Die Anzahl an verfügbaren Vorspannungen und Gruppen ist grundsätzlich voneinander unabhängig. Es können mehrere Gruppen mit der gleichen Vorspannung versorgt werden, und ebenso kann eine verfügbare Vorspannung von keiner Gruppe genutzt sein.

Damit beim Auslesen eine Auswahl getroffen werden kann, ist in der Ausleseschaltung eine Umschaltung vorgesehen, um die zugeordneten Lawinenphotodiodenelemente unterschiedlich zu behandeln. Der Geigerstrom oder ein dem Geigerstrom entsprechender Messstrom kann deshalb wahlweise einem Messpfad oder einem Ausblendungspfad zugeführt werden. So kann über den Ausblendungspfad die elektronische Blende erzeugt werden, die gezielt bestimmte Lawinenphotodiodenelemente auf den Ausblendungspfad schaltet. Dadurch sind diese Bereiche stummgeschaltet oder werden jedenfalls anders ausgewertet als Lawinenphotodiodenelemente, deren Ausleseschaltung auf den Messpfad leitet.

Die Erfindung hat den Vorteil, dass durch Nutzen der elektronischen Blende die Empfangsoptik deutlich vereinfacht oder sogar verzichtbar wird. Der Umgang mit starken Lichtsignalen oder etwas allgemeiner einer großen Empfangsdynamik wird erleichtert. Die einleitend genannten Funktionen und Optimierungen der Empfangsoptik, wie die Unterdrückung von Fremdlichteinflüssen oder die Vermeidung abstands- oder winkelabhängiger Effekte, werden erreicht, somit die Leistungsfähigkeit des Lichtempfängers verbessert, und dennoch optische Elemente wie Blenden, Filter oder Linsen eingespart.

Dadurch entstehen mehr Freiheitsgrade bei der Platzierung von Komponenten eines Sensors, in dem der Lichtempfänger genutzt wird, und die Miniaturisierung wird vereinfacht. Die Toleranzkette wird verkürzt, der Ausgleich von Toleranzen vereinfacht, und die Prozesssicherheit gesteigert. Zugleich bietet die elektronische Blende eine hohe Anwendungsvielfalt, und der Lichtempfänger kann damit durch hohe Stückkosten auch zu geringen Kosten hergestellt werden. Die Integration von Lawinenphotodiodenelementen und Vorspannungsversorgung beziehungsweise Ausleseschaltung in einem Halbleiterprozess ist einfach und kostengünstig möglich.

Eine elektronische Blende kann rein elektronisch justiert werden, mechanische Justierung und Vorrichtungen dafür entfallen ebenso wie mechanische Sicherungen gegen Dejustage. Es ist nicht erforderlich, für eine Justierung physischen Zugang zu erlangen, und sie ist wesentlich leichter automatisierbar. Eine elektronische Blende kann Blendenmuster erzeugen, die durch eine optische Blende nur schwer oder gar nicht erreichbar wären. Zumindest in größeren Klassen oder Gruppen wird erkennbar, welche Lawinenphotodioden beziehungsweise Gruppen auf ein Lichtsignal angesprochen haben.

Der Lichtempfänger weist bevorzugt eine elektronische Blendeneinheit auf, die dafür ausgebildet ist, die Empfindlichkeit von Lawinenphotodiodenelementen durch Anpassung der Vorspannung und/oder durch Umschalten des Geigerstroms in den Messpfad oder in den Ausblendungspfad einzustellen. Die elektronische Blendeneinheit ist folglich eine Ansteuerung oder Schnittstelle für die erfindungsgemäße Empfindlichkeitsanpassung durch Vorspannung oder Auswahl beim Auslesen. Sie kann zumindest teilweise auf demselben Chip integriert sein wie der Lichtempfänger. Eine Implementierung als separater Baustein oder Schaltkreis ist aber ebenso denkbar, die elektronisehe Blendeneinheit soll unabhängig von der physischen Umsetzung wegen ihrer Funktion als Teil des Lichtempfängers aufgefasst werden. Die elektronische Blendeneinheit kann in verschiedenen Phasen die Empfindlichkeit einstellen, etwa im Rahmen einer Werkseinstellung, einer Kalibration oder Justierung bei der Inbetriebnahme oder bei einer Wartung, aber auch dynamisch im Betrieb. Die jeweils einzustellende konkrete Empfindlichkeit ebenso wie die tatsächlich benötigten Vorspannungen oder Auswahleinstellungen der Ausleseschaltung können beispielsweise als Parameter oder durch einen Algorithmus abgeleitet werden.

Die elektronische Blendeneinheit ist bevorzugt dafür ausgebildet, Bereiche des Lichtempfängers zu aktivieren oder zu deaktivieren. Damit wird die elektronische Blende wie eine undurchsichtige optische Blende, die kein Licht durchlässt. Erreicht wird dies durch Absenken der Vorspannung unter die Durchbruchspannung oder indem beim Auslesen der Geigerstrom in den Ausblendungspfad gelenkt wird.

Die elektronische Blendeneinheit ist bevorzugt dafür ausgebildet, eine lokale Empfindlichkeitsverteilung des Lichtempfängers einzustellen. Hier wirkt die elektronische Blende eher als optisches Filter mit einer einstellbaren Dämpfungswirkung. Die Empfindlichkeitseinstellung erfolgt über eine entsprechende Anpassung der Vorspannung, oder hier genauer der Überspannung oberhalb der Durchbruchspannung. Einen Effekt, der einer Empfindlichkeitseinstellung sehr nahe kommt, lässt sich auch erreichen, indem ein bestimmter Prozentsatz von Lawinenphotodiodenelementen in einem Bereich deaktiviert wird.

Die elektronische Blendeneinheit ist bevorzugt dafür ausgebildet, in einem Bereich eines Lichtflecks auf dem Lichtempfänger eine hohe Empfindlichkeit und den übrigen Lichtempfänger unempfindlich einzustellen. Die elektronische Blende nimmt hier die Form einer klassischen Blende an, die Bereiche um ein einfallendes Lichtbündel herum ausblendet. Die unempfindlichen Bereiche können deaktiviert werden, aber ebenso kann lediglich durch eine kleinere Überspannung die Verstärkung und Auslösewahrscheinlichkeit abgeschwächt werden.

Die elektronische Blendeneinheit ist bevorzugt dafür ausgebildet, die Größe und/oder Position des Bereichs des Lichtflecks an einen Abstand eines Objekts anzupassen. Dabei steht die Größe stellvertretend für die Geometrie, die meist einfach mit der Größe skaliert. Der Ursprung des Lichtflecks ist eine Reflexion oder Remission an einem Objekt, oft eines dem Lichtempfänger zugeordneten eigenen Lichtsenders. Die Größe des Lichtflecks unterscheidet sich im Nah- und Fernbereich in Abhängigkeit von einer dem Lichtempfänger zugeordneten Empfangsoptik. Bei einem Versatz der optischen Achsen von Lichtsender und Lichtempfänger ergibt sich ein abstandsabhängiger Versatz, der bei Abstandsmessung durch Triangulation der Messeffekt ist. Wenn die elektronische Blende den Bereich hoher Empfindlichkeit entsprechend abstandsabhängig einstellt oder nachführt, wird ein deutlich besseres Signal-Rausch-Verhältnis erreicht, beziehungsweise es werden Übersteuerungen gezielt vermieden. Die erwartete Größe beziehungsweise Position wird beispielsweise theoretisch oder durch eine Messung vorab bestimmt. Die Empfindlichkeit in dem Bereich um den Lichtfleck kann zusätzlich noch mit dem Abstand erhöht werden, da von einem fernen Objekt nicht nur ein größerer und eventuell lateral verschobener Lichtfleck entsteht, sondern auch weniger Licht empfangen wird.

Die elektronische Blendeneinheit ist bevorzugt dafür ausgebildet, die Größe und/oder Position dynamisch in Abhängigkeit von der Ausbreitungsgeschwindigkeit von Licht anzupassen. Damit folgt praktisch die Blende einem Lichtsignal, insbesondere einem Lichtsignal eines eigenen Lichtsenders. Das ist besonders geeignet für ein pulsbasiertes Lichtlaufzeitverfahren. Die elektronische Blende passt dann für alle potentiellen Empfangszeiten zu der Entfernung eines Objekts, das in diesem Moment erfasst würde, beziehungsweise zu dem von diesem Objekt erzeugten Lichtfleck. Dabei sollte aber darauf geachtet werden, dass effektiv nur die halbe Lichtgeschwindigkeit zum Tragen kommt, weil auch der Rückweg eines am Objekt remittierten Lichtsignals berücksichtigt werden muss. Die relevante Ausbreitungsgeschwindigkeit ist typischerweise die Vakuumlichtgeschwindigkeit, aber eine langsamere Lichtgeschwindigkeit in anderen Medien prinzipiell denkbar. Die Anpassung kann kontinuierlich, vorzugsweise aber in Stufen erfolgen, damit den Lawinenphotodioden etwas Zeit gegeben wird, sich auf die neue Empfindlichkeit einzustellen. Alternativ wird die elektronische Blende langsamer und nicht dynamisch innerhalb derselben Messung angepasst, beispielsweise die Entfernung des Objekts durch eine frühere Messung oder Schätzung bestimmt oder direkt eine Sollentfernung vorgegeben.

Die elektronische Blendeneinheit ist bevorzugt dafür ausgebildet, die Empfindlichkeit an eine Intensität von auf dem Lichtempfänger auftreffendem Empfangslicht anzupassen. In dieser Ausführungsform wirkt die elektronische Blende als Dämpfungsfilter ähnlich dem Effekt selbstverdunkelnder Brillengläser. Die Intensität des Empfangslichts wird vorzugsweise gemessen, kann aber auch eine geschätzte oder vorgegebene Größe sein. Die Anpassung an die Intensität kann mit anderen Effekten der elektronischen Blende kombiniert werden, sich beispielsweise nur auf einen empfindlichen Bereich beziehen, während andere Bereiche deaktiviert sind.

Die elektronische Blendeneinheit ist bevorzugt dafür ausgebildet, die Empfindlichkeit an eine Intensitätsverteilung auf dem Lichtempfänger auftreffenden Empfangslichts anzupassen. In dieser Ausführungsform erfolgt die Anpassung nicht nur an eine skalare Intensität, sondern lokal an eine beliebige Lichtverteilung auf dem Lichtempfänger.

Die elektronische Blendeneinheit ist bevorzugt dafür ausgebildet, die Empfindlichkeit invers zu der Intensitätsverteilung anzupassen. Der Lichtempfänger ist also dort besonders empfindlich, wo wenig Licht einfällt, und umgekehrt in besonders hellen Bereichen, in denen Übersteuerung droht, vergleichsweise unempfindlich. Im Ergebnis erfolgt eine Homogenisierung. Vorzugsweise erfolgt vor einer eigentlichen Messung in einem Einlernverfahren eine Anpassung an die Verteilung in einem Lichtfleck eines eigenen Lichtsenders.

Die elektronische Blendeneinheit ist bevorzugt dafür ausgebildet, in mehreren voneinander separierten Bereichen auf dem Lichtempfänger eine hohe Empfindlichkeit einzustellen. Die elektronische Blende ist damit auf den Empfang mehrerer Lichtflecken eingestellt. Anwendungsbeispiele sind eine mehrkanalige Messung, etwa ein Mess- und ein Referenzkanal oder zwei Messkanäle, die sich in der Wellenlänge oder einer anderen Eigenschaft unterscheiden oder einfach redundant messen.

Die elektronische Blendeneinheit ist bevorzugt dafür ausgebildet, aus Empfangslicht in einem separierten Bereich gewonnene Information zur Einstellung der Empfindlichkeit in einem anderen separierten Bereich zu nutzen. Hierbei dient der eine Messkanal dazu, die elektronische Blende für den anderen Messkanal zu adaptieren. Die Rollen der Kanäle können festgelegt sein, oder der eine Kanal dient alternierend der Einstellung des anderen Kanals.

In vorteilhafter Weiterbildung ist ein optoelektronischer Sensor mit mindestens einem erfindungsgemäßen Lichtempfänger vorgesehen, wobei der Sensor zur Entfernungsmessung und/oder als Codeleser und/oder zur Datenübertragung ausgebildet ist. Die Entfernung kann durch Triangulation bestimmt werden, wie in einem Triangulationstaster oder einer Stereokamera. Weitere nicht abschließende Anwendungen des Lichtempfängers in einem optoelektronischen Sensor sind Codelesen oder Datenübertragung oder Kombinationen dieser Anwendungen in einem Sensor.

Der Sensor ist vorzugsweise ein entfernungsmessender Sensor mit einem Lichtsender zum Aussenden eines Lichtsignals und mit einer Steuer- und Auswertungseinheit, die dafür ausgebildet ist, aus einer Lichtlaufzeit zwischen Aussenden des Lichtsignals und Empfangen des von dem Objekt aus dem Überwachungsbereich remittierten Lichtsignals einen Abstand des Objekts zu bestimmen. Für derartige Sensoren sind Ausführungsformen, in denen die elektronische Blende an den Abstand des Objekts angepasst wird, besonders relevant, weil der tatsächliche Abstand die Messgröße eines solchen Sensors ist. Das Lichtsignal weist bevorzugt einen Lichtpuls auf. Der Sensor misst also Entfernungen nach dem Pulsverfahren. Dabei sind auch kompliziertere Formen wie Doppelpulse oder sogar Pulscodes denkbar. Es können auch mehrere Lichtpulse nacheinander ausgesandt, empfangen und die jeweiligen Einzelergebnisse gemeinsam statistisch ausgewertet werden, etwa in einem Pulsmittelungsverfahren. Alternativ ist ein Phasenverfahren denkbar, denn auch hier hängt der Lichtfleck von der Objektentfernung ab. Das Lichtlaufzeitverfahren kann in einem eindimensionalen Entfernungstaster, einem Laserscanner oder einem Bildsensor einer 3D-Kamera nach dem Lichtlaufzeitprinzip genutzt werden.

Wie oben erwähnt, gibt es für die elektronische Blende zwei Eingriffsmöglichkeiten, nämlich eine Beeinflussung am Eingang mittels Anpassung der Vorspannung oder am Ausgang durch Umleiten des Geigerstroms in einen Ausblendungspfad. Für diese beiden Eingriffsmöglichkeiten sind zahlreiche Ausgestaltungen denkbar.

Zunächst werden Ausführungsformen für die Anpassung der Vorspannung erläutert. Dazu sind die Lawinenphotodiodenelemente einer Gruppe bevorzugt wahlweise mit einer der unterschiedlichen Vorspannungen versorgbar. Zwischen den Lawinenphotodiodenelementen zumindest einer Gruppe und den Vorspannungsanschlüssen ist bevorzugt ein Umschaltelement angeordnet. Dieses Umschaltelement ist ein Mittel, die Wahl einer Vorspannung für eine Gruppe zu treffen. Das Umschaltelement ist vorzugsweise ein Mehrfachschalter zwischen nicht nur zwei, sondern mehreren oder allen verfügbaren unterschiedlichen Vorspannungen. Das Umschaltelement kann codiert, insbesondere binär codiert arbeiten, um mit einer möglichst geringen Anzahl von Steuerbits auch bei einer etwas größeren Anzahl verfügbarer Vorspannungen auszukommen.

Mindestens zwei der mehreren Vorspannungsanschlüsse sind bevorzugt nach außen geführt. Insbesondere sind alle Vorspannungsanschlüsse nach außen geführt. Dort können externe unterschiedliche Vorspannungen bereitgestellt werden. Externe Vorspannungsanschlüsse ermöglichen ein sehr einfaches Schaltungskonzept, bei dem die Anschlüsse und die Vorspannungen von außen zugänglich und steuerbar sind.

Mindestens einer der Vorspannungsanschlüsse ist vorzugsweise intern, wobei mindestens ein Spannungsanpassungselement vorgesehen ist, um unterschiedliche Vorspannungen aus einer externen Spannung zu erzeugen. Das Spannungsanpassungselement passt die externe Vorspannung um eine Differenzspannung an, und mit weiteren Spannungsanpassungselementen oder mehreren Differenzspannungen entstehen mehrere Vorspannungen. Selbstverständlich kann auch die externe Spannung als solche als eine der unterschiedlichen Vorspannungen genutzt werden, insbesondere durch Wahl einer Differenzspannung Null. Auch eine Mischform mit mehreren nach außen geführten Vorspannungsanschlüssen ist denkbar, wobei aber vorzugsweise alle Vorspannungsanschlüsse intern sind. Dann ist nur noch eine einzige externe Spannung erforderlich, um alle Vorspannungen abzuleiten und somit intern bereitzustellen, was zu erheblichen Einsparungen bei externen Schaltungsaufwänden mit Platz- und Kostenvorteilen führt.

Das Spannungsanpassungselement ist bevorzugt spannungsabziehend ausgebildet. Dann wird vorzugsweise eine externe Spannung an den Lichtempfänger angelegt, die zu hoch ist beziehungsweise der höchsten benötigten Vorspannung entspricht, um eine ausreichende Reserve für den Spannungsabzug vorzuhalten. Schaltungstechnisch ist es besonders einfach, wenn die Kompensation stets durch Spannungsabzug erfolgt. Möglich wäre aber auch alternativ, wenn man den erhöhten Aufwand in Kauf nimmt, eine positive Kompensation, welche die von außen angelegte Vorspannung anhebt, etwa durch eine Ladungspumpe.

Das Spannungsanpassungselement weist bevorzugt eine Ansteuerung auf, um die zu erzeugende Vorspannung einzustellen. Diese Ansteuerung ist insbesondere von außen zugänglich, beispielsweise als digitale Ansteuerung. Dadurch werden die Werte der verfügbaren unterschiedlichen Vorspannungen variabel, und das kann genutzt werden, um geeignete Empfindlichkeitsstufen bereitzustellen, aber auch die Empfindlichkeit der mit der jeweiligen Vorspannung verbundenen Gruppen von Lawinenphotodiodenelemente anzupassen. Somit gibt es prinzipiell zwei Möglichkeiten für eine Veränderung der Empfindlichkeit, nämlich mit welcher der unterschiedlichen Vorspannungen eine Gruppe von Lawinenphotodiodenelementen verbunden ist und wie hoch die verfügbaren Vorspannungen sind, und diese Möglichkeiten sind je nach Ausführungsform alternativ oder kumulativ einsetzbar.

Die Lawinenphotodiodenelemente zumindest einer Gruppe sind bevorzugt fest mit einem jeweiligen Vorspannungsanschluss verbunden. Nochmals bevorzugt sind alle Gruppen fest mit einem Vorspannungsanschluss verbunden. Das führt zu einem einfacheren Design des Lichtempfängers, jedoch verringert sich zugleich die Variabilität. Eine Anpassung ist hier nur noch durch Herab- oder Heraufsetzen der Vorspannung an den Vorspannungsanschlüssen möglich.

Die Gruppen bilden vorzugsweise ein Schachbrettmuster, ein konzentrisches Muster oder mehrere lateral verschobene Bereiche. Das sind einige vorteilhafte Beispiele für eine Aufteilung in empfindlichere und unempfindlichere Bereiche, wobei die Muster je nach Ausführungsform durch feste Verdrahtung oder dynamisches Verschalten von passenden Gruppen auf eine jeweils gleiche Vorspannung entstehen. Das Muster definiert gemeinsam mit den zugehörigen Vorspannungsniveaus das Verhalten der elektronischen Blende, wobei Blendenmuster denkbar sind, die sich mit optischen Elementen schwer oder gar nicht realisieren ließen. Ein Schachbrettmuster steht hier stellvertretend für ein Muster, bei dem lokal alternierend sowohl empfindlichere als auch unempfindlichere Lawinenphotodiodenelemente verfügbar sind. Damit kann eine Messung mit viel und wenig Signal gleichzeitig erfolgen, ohne Zeitverlust, der bei einem Herkömmlichen Durchfahren der Empfindlichkeit (Sweep / Step) entstünde. Ein konzentrisches Muster ist beispielsweise für einen Lichtfleck geeignet, dessen Größe abstandsabhängig ist, oder der bei relativer Objektbewegung in und außer Fokus kommt. Ein Beispiel für eine laterale Verschiebung ist die unvermeidliche Verschiebung bei einem biaxialen Sende- und Empfangspfad, die bei Triangulationsverfahren sogar der gewünschte Messeffekt ist. Weiter denkbar ist, mehrere Bereiche für mehrere Messkanäle zu nutzen, etwa einen Mess- und einen Referenzkanal oder Bereiche für mehrere Sender mit unterschiedlichen Eigenschaften, insbesondere Wellenlängen.

Mindestens ein Vorspannungsanschluss stellt bevorzugt eine Vorspannung oberhalb und ein Vorspannungsanschluss eine Vorspannung unterhalb der Durchbruchspannung bereit. So kann der Geiger-Modus wahlweise an- und abgeschaltet werden. Das ist praktisch gleichbedeutend mit einem An- und Abschalten des Lichtempfangs, da der Verstärkungsfaktor im Geiger-Modus in der Größenordnung von 10⁶ liegt.

Die Vorspannungsanschlüsse stellen bevorzugt unterschiedliche Überspannungen oberhalb der Durchbruchspannung bereit. Mit der Überspannung hängen die Verstärkung und die Auslösewahrscheinlichkeit der Lawinenphotodiodenelemente zusammen. Somit kann eine elektronische Blendenwirkung nicht nur binär im Sinne einer Abschaltung erzielt werden, wenn die Vorspannung unterhalb der Durchbruchspannung liegt, sondern es wird eine graduelle Schwächung entsprechend einer nur dämpfenden Blende mit Zwischenstufen möglich. Vorzugsweise stehen an den Vorspannungsanschlüssen in einer Mischform zumindest eine Vorspannung unterhalb der Durchbruchspannung und mehreren unterschiedliche Überspannungen zur Verfügung.

Die Lawinenphotodiodenelemente sind bevorzugt rotempfindlich. Solche Lawinenphotodiodenelemente zeigen besonders deutlich die Eigenschaft, dass mit der Vorspannung auch der Quantenwirkungsgrad, damit die Auslösungswahrscheinlichkeit und letztlich die Empfindlichkeit variiert. Damit eignen sich solche Lawinenphotodiodenelemente besonders für eine Anpassung einer elektronischen Blende.

Weitere Ausgestaltungsmöglichkeiten betreffen das Auslesen. Der Ausblendungspfad ist bevorzugt dafür ausgebildet, den Geigerstrom oder den Messstrom ohne Auslesen abfließen zu lassen. Das ist das elektronische Gegenstück zu dem optischen Effekt einer undurchsichtigen Blende, von der das Licht und damit das gesamte Eingangssignal abgeschirmt wird. Entsprechend erzeugt einfallendes Licht auf Lawinenphotodiodenelemente, deren Ausleseschaltungen den Geigerstrom oder Messstrom dem Ausblendungspfad zuführen, kein gemessenes Signal und geht somit praktisch in der elektronischen Blende verloren. Die elektronische Blende muss aber nicht so wirken. Es ist alternativ auch möglich, in dem Ausblendungspfad den Geigerstrom oder Messstrom zu bestimmen. Diese Messinformation kann beispielsweise dazu dienen, die elektronische Blende weiter anzupassen oder Erkenntnisse über das einfallende Signal und beispielsweise Fremdlichtanteile zu gewinnen.

Für die Ausleseschaltung und das zugehörige einzelne Lawinenphotodiodenelement oder die zugehörige Gruppe von Lawinenphotodiodenelementen ist bevorzugt eine Signalabgriffschaltung vorgesehen, die ein aktives Kopplungselement mit einem Eingang, der mit den Lawinenphotodiodenelementen verbunden ist, und einem Ausgang aufweist, das den Geigerstrom am Eingang auf den in Verlauf und Pegel dem Geigerstrom entsprechenden Messstrom abbildet, wobei der Eingang für den Geigerstrom einen virtuellen Kurzschluss gegen ein Potential bildet und der Ausgang von dem Eingang entkoppelt ist. Vorzugsweise gibt es so viele Ausleseschaltungen wie Signalabgriffschaltungen, welche die vorhandenen Lawinenphotodiodenelemente in gleicher Weise gruppieren und zuordnen. Die Ausleseschaltung kann insbesondere direkt oder mittelbar mit den Lawinenphotodiodenelementen und der Signalabgriffschaltung verbunden sein. Der Signalabgriff nutzt ein aktives Auskoppelverfahren, das hoch empfindlich und dabei sehr schnell ist. Das Lawinenphotodiodenelement ist dabei wechselspannungsmäßig praktisch kurzgeschlossen, so dass es bei einem Auslösen der Lawine nur zu kleinen Spannungsänderungen zwischen den Anschlüssen kommt, damit auch parasitäre Kapazitäten der Lawinenphotodiodenelemente kaum umgeladen werden und sich somit nur geringfügig auf die Ausgangssignalqualität und Bandbreite auswirken.

Ein derartiger aktiver Signalabgriff ist ganz besonders vorteilhaft und soll deshalb noch weiter erläutert werden. Die Lawinenphotodiodenelemente im Geiger-Modus oder SPADs wirken praktisch wie hoch lichtempfindliche Schalter, die durch Lichteinfall einen Geigerstrom auslösen. Herkömmliche Formen des Signalabgriffs sind aufgrund unzureichend optimierter Schaltungen nicht in der Lage, die sehr schnellen Abläufe bei einem Lawinendurchbruch im Messsignal widerzuspiegeln. Deshalb ist das aktive Kopplungselement vorgesehen und nicht lediglich passive Elemente wie ein Widerstand oder ein Transformator. Das aktive Kopplungselement bietet für den Geigerstrom an seinem Eingang einen virtuellen Kurzschluss gegen ein vorzugsweise festes Potential. Praktisch wird dies nur bis auf wenige Ohm oder Bruchteile von einem Ohm gelingen. Es bedeutet aber, dass der Geigerstrom nahezu vollständig aus dem Detektor, also dem jeweils auslösenden Lawinenphotodiodenelement, in die jeweilige Signalabgriffschaltung fließt und über den Kurzschluss abfließen kann, ganz anders als beispielsweise bei einem einfachen Messwiderstand. Deshalb kann die durch die Vielzahl der Lawinenphotodiodenelemente gebildete parasitäre Kapazität nicht mehr wie ein Tiefpass wirken, und es finden dort praktisch keine Umladevorgänge mehr statt. Die schnellen hochfrequenten Geigerströme können im Wesentlichen ungehindert zum verstärkenden Element abfließen. Weiter erzeugt das Kopplungselement an seinem Ausgang aktiv einen Messstrom, der dem Geigerstrom entspricht und damit insbesondere den gleichen zeitlichen Verlauf zeigt. Das aktive Kopplungselement kann außerdem durch eine Verstärkung dafür sorgen, dass der Messstrom einen für die weitere Verarbeitung geeigneten Pegel aufweist. Zugleich wird der Messstrom durch das aktive Kopplungselement nahezu vollständig von dem Geigerstrom entkoppelt. Die weitere Verarbeitung des Messstroms wirkt daher nicht auf den Geigerstrom zurück. Da der mit dem Detektionsereignis verfügbare Strom praktisch vollständig in das aktive Kopplungselement fließen kann, ergibt sich eine optimale Verstärkung mit sehr gutem Signal/Rausch-Verhältnis.

Der Verlauf des Messstroms weicht dank des aktiven Kopplungselements bevorzugt erst für Änderungen im höheren Gigahertzbereich, insbesondere oberhalb zwei oder drei GHz, durch frequenzbedingte Verluste erheblich von dem Geigerstrom ab. Erst für Frequenzen des einfallenden Lichtsignals oberhalb von einigen GHz zeigt die Abbildung des Geigerstroms auf den Messstrom deutlich spürbare frequenzbedingte Verluste. Im Gegensatz dazu fällt bei herkömmlichen Lösungen das Messsignal schon bei mittleren Frequenzen von einigen hundert MHz um mehrere Dekaden ab. Somit gelingt es mit dem aktiven Kopplungselement, auch sehr kurze Pulse und Flanken im Sub-Nanosekundenbereich aufzulösen.

Das Kopplungselement ist vorzugsweise dafür ausgebildet, die eingangsseitige Spannung konstant zu halten. Wenn nun ein Geigerstrom fließt, muss zum Aufrechthalten der Spannung vom Ausgang her ein Ausgangsstrom durch das Kopplungselement fließen. Auf diese Weise wird der Geigerstrom am Eingang auf einen entsprechenden Messstrom am Ausgang abgebildet.

Das Kopplungselement weist bevorzugt einen Signalabgriff-Transistor auf. Insbesondere ist dies genau ein Signalabgriff-Transistor, und nochmals bevorzugt besteht das Kopplungselement aus dem Signalabgriff-Transistor. Damit ist das Kopplungselement einstufig, nicht mehrstufig wie beispielsweise ein herkömmlich zum Auslesen eingesetzter Transimpedanzverstärker. Die technische Ausführung des Signalabgriff-Transistors ist nicht beschränkt und umfasst Bipolartransistoren oder Feldeffekttransistoren in ihren verschiedenen Bauformen. Allerdings sollte vorzugsweise ein Hochfrequenztransistor verwendet werden, um die erfindungsgemäßen Vorteile einer großen Bandbreite des Lichtempfängers tatsächlich zu erzielen.

Der Signalabgriff-Transistor ist vorzugsweise in Basisschaltung oder Gateschaltung betrieben, indem der Eingang mit dem Emitter oder mit Source, der Ausgang mit dem Kollektor oder mit Drain und die Basis oder das Gate mit einem festen Potential verbunden ist. Die jeweils alternativ genannten Begriffe beziehen sich einerseits auf einen Bipolartransistor und andererseits auf einen FET, um nochmals deutlich herauszustellen, dass der Transistor nicht auf eine bestimmte Technologie festgelegt sein soll. Obwohl prinzipiell auch die viel üblichere Emitterschaltung denkbar wäre, ist die Basisschaltung durch einen niedrigen Eingangswiderstand, eine höhere Bandbreite und einen flacheren Frequenzgang überlegen.

Die Ausleseschaltung ist bevorzugt mit dem Eingang des aktiven Kopplungselements verbunden. Dies ermöglicht eine besonders einfache Ausleseschaltung, die auf den Geigerstrom der Lawinenphotodiodenelemente zugreifen kann.

Die Ausleseschaltung weist bevorzugt nur einen Auslese-Transistor auf. Das ist eine besonders einfache Ausleseschaltung, die besonders geeignet ist, wenn eine große Anzahl von Ausleseschaltungen für kleine Gruppen oder sogar einzelne Lawinenphotodiodenelemente vorgesehen sind. Wie schon zu dem Signalabgriff-Transistor erläutert, sind auch für den Auslese-Transistor verschiedenste technische Ausführungen möglich.

Vorzugsweise ist die Basisspannung des Signalabgriff-Transistors oder des Auslese-Transistors zur Umschaltung zwischen Messpfad und Ausblendungspfad anpassbar. Je nachdem, wo das höhere Basispotential anliegt, verlässt der andere Transistor den Linearbetrieb und sperrt. Deshalb kann über die Basisspannung gesteuert werden, ob der Geigerstrom über den Signalabgriff-Transistor in die Signalabgriffschaltung und weiter in den Messpfad fließt oder über den Auslese-Transistor in den Ausblendungspfad. Vorzugsweise bleibt das Basispotential am Signalabgriff-Transistor konstant, um eine ungestörte Messung zu erhalten, und die Anpassung des Basispotentials erfolgt am Auslese-Transistor.

Die Ausleseschaltung ist vorzugweise mit dem Ausgang verbunden. In dieser Ausführungsform fließt der Geigerstrom zunächst in die Signalabgriffschaltung und wird dort in den Messstrom abgebildet. Die Weiterverarbeitung des Messstroms in der Ausleseschaltung und insbesondere die Umschaltung zwischen Messpfad und Ausblendungspfad hat dann wegen der Entkopplung durch die Signalabgriffschaltung keine Rückwirkung auf den Geigerstrom und die Lawinenphotodiodenelemente, die bei einer Ausleseschaltung am Eingang nicht gänzlich ausgeschlossen werden können.

Die Ausleseschaltung weist bevorzugt mindestens zwei parallel geschaltete Auslese-Transistoren jeweils in Kaskodenschaltung mit dem Signalabgriff-Transistor auf. Die Auslese-Transistoren bilden jeweils einen Verzweigungspunkt, an den sich der Messpfad beziehungsweise der Ausblendungspfad anschließt. Die Umschaltung erfolgt über das Basispotential. Der Messstrom fließt über den Auslese-Transistor mit dem höheren Basispotential, wohingegen der andere Auslese-Transistor den Linearbetrieb verlässt und sperrt. Dadurch, dass zwei Auslese-Transistoren vorhanden sind, können die Sperrspannungsanforderungen der beiden Auslese-Transistoren sowie die des Singalabgriffs-Transistors herabgesetzt werden, so dass sich parasitäre Effekte und vor allem parasitäre Kapazitäten verringern und ein nochmals verbessertes Hochfrequenzverhalten erreicht wird.

In dem Ausblendungspfad ist bevorzugt ein Messabgriff vorgesehen. Der Geigerstrom oder Messstrom geht also nicht einfach verloren, sondern wird auch bestimmt, um zusätzliche Messinformation zu gewinnen, sei es zur Anpassung der Blende oder sogar als zusätzlicher Messkanal.

Die Lawinenphotodiodenelemente weisen bevorzugt eine Elektrode zum kapazitiven Auskoppeln des Geigerstroms auf, wobei die Ausleseschaltung mit der Elektrode verbunden ist. Die Verbindung ist direkt oder indirekt über die zwischengeschaltete Signalabgriffschaltung. Die Elektrode zum Auskoppeln ist vorzugsweise eine dritte Elektrode zusätzlich zu einer ersten Elektrode und einer zweiten Elektrode, über welche die Lawinenphotodiodenelemente vorgespannt sind, um die Vorspannung bereitzustellen, aus der sich der Lawinendurchbruch speist. Durch die von der Bereitstellung der Vorspannung unabhängige Elektrode ist ein schnelleres Auslesen möglich. Die dritte Elektrode ist vorzugsweise zwischen dem Lawinenphotodiodenelement und der Ladeeinheit angeschlossen. Vorzugsweise ist der Eingang mit der dritten Elektrode verbunden. Damit nutzt die Signalabgriffschaltung die bereitgestellte Elektrode zum schnellen Auslesen. Allerdings sind nachteilige Effekte der Schaltkreise zum Vorspannen auf das Auslesen durch das erfindungsgemäße Kopplungselement ohnehin unterdrückt. Insofern ist ein schnelles Auslesen weitgehend unabhängig von der dritten Elektrode, die also alternativ nicht vorgesehen oder nicht genutzt sein kann. Die Signalabgriffschaltung beziehungsweise die Ausleseschaltung ist dann mit der ersten Elektrode oder der zweiten Elektrode verbunden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines optoelektronischen Sensors mit einem Lichtempfänger mit einer Vielzahl von Lawinenphotodiodenelementen im Geiger-Modus;
- Fig. 2: eine schematische Darstellung eines Lichtempfängers zur Erläuterung des Eingriffs einer elektronischen Blende über die Vorspannung oder das Auslesen;
- Fig. 3: eine Darstellung einer Signalabgriffschaltung für ein Lawinenphotodiodenelement mit einem aktiven Kopplungselement;
- Fig. 4: eine vereinfachte Blockdarstellung entsprechend Figur 3;
- Fig. 5: eine Blockdarstellung einer Ausführungsform einer Ausleseschaltung zum wahlweisen Umschalten zwischen einem Messpfad und einem Ausblendungspfad vor dem Signalabgriff;
- Fig. 6: eine Darstellung einer beispielhaften Schaltung für die Ausleseschaltung gemäß Figur 5;
- Fig. 7: eine Blockdarstellung einer Ausführungsform einer Ausleseschaltung zum wahlweisen Umschalten zwischen einem Messpfad und einem Ausblendungspfad nach dem Signalabgriff;
- Fig. 8: eine Darstellung einer beispielhaften Schaltungsanordnung für die Ausleseschaltung gemäß Figur 7;
- Fig. 9: ein schematisches Schaltbild eines Lichtempfängers mit Versorgung von Lawinenphotodiodenelementen mit unterschiedlichen Vorspannungen durch Umschalten;
- Fig. 10: ein schematisches Schaltbild eines Lichtempfängers mit Versorgung von Lawinenphotodiodenelementen mit unterschiedlichen Vorspannungen durch Spannungsabzug;
- Fig. 11: ein schematisches Schaltbild eines Lichtempfängers mit Versorgung von Lawinenphotodiodenelementen mit unterschiedlichen Vorspannungen durch Umschalten und Spannungsabzug;
- Fig. 12: eine Illustration einer abstandsabhängigen Einstellung einer elektronischen Blende;
- Fig. 13a: eine Darstellung eines Empfangslichtflecks mit inhomogener Intensitätsverteilung auf einem Lichtempfänger;
- Fig. 13b: eine Darstellung des Lichtflecks gemäß Figur 13a nach Homogenisierung durch Einstellung einer elektronischen Blende;
- Fig. 14: eine Darstellung zweier Empfangslichtflecken auf einem Lichtempfänger, die für einen Mess- und einen Referenzkanal genutzt werden; und
- Fig. 15: eine Darstellung zweier Empfangslichtflecken auf einem Lichtempfänger, die für eine mehrkanalige Messung mit unterschiedlichen Eigenschaften oder zur gegenseitigen Einstellung einer elektronischen Blende genutzt werden.

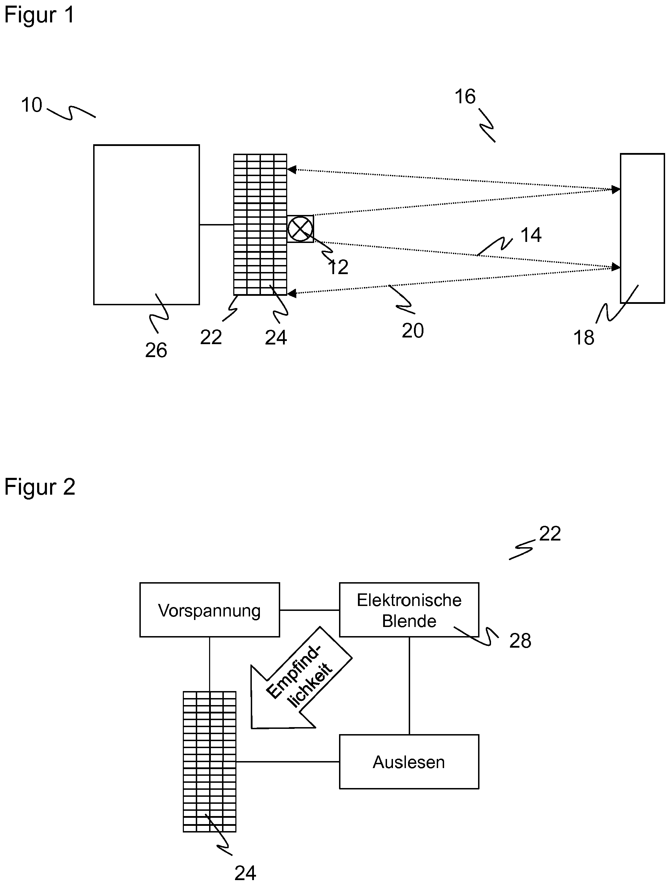

Figur 1 zeigt eine schematische Darstellung eines optoelektronischen Sensors 10 in einer Ausführungsform als einstrahliger Lichttaster. Ein Lichtsender 12, beispielsweise eine LED oder eine Laserlichtquelle, sendet ein Lichtsignal 14 in einen Überwachungsbereich 16 aus. Trifft es dort auf ein Objekt 18, so wird ein Teil des Lichtsignals remittiert oder reflektiert und kehrt als remittiertes Lichtsignal 20 zu einem Lichtempfänger 22 zurück. Dieser Lichtempfänger 22 umfasst eine Vielzahl von Lawinenphotodiodenelementen 24 im Geiger-Modus oder SPADs. Die Empfangssignale der Lawinenphotodiodenelemente 24 werden von einer Steuer- und Auswertungseinheit 26 ausgelesen und dort ausgewertet.

Der Sensor 10 weist in einer praktischen Ausführungsform weitere Elemente auf, insbesondere Sende- und Empfangsoptiken und Anschlüsse, auf die hier vereinfachend nicht eingegangen wird. Die Auftrennung in Lichtempfänger 22 und Steuer- und Auswertungseinheit 26 in Figur 1 ist auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodiodenelemente 24 und einzelnen oder Gruppen von Lawinenphotodiodenelementen 24 zugeordnete Schaltkreise zu deren Auswertung und Ansteuerung teilen. Außerdem ist die optische Anordnung mit einem Lichtsender 12, der einen kleinen Anteil des Lichtempfängers 22 verdeckt, rein beispielhaft. Alternativ sind auch andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden. Der Sensor 10 ist vorzugsweise entfernungsmessend. Dazu bestimmt die Steuer- und Auswertungseinheit 26 eine Lichtlaufzeit vom Aussenden des Lichtsignals 14 bis zum Empfang des remittierten Lichtsignals 20 und rechnet dies über die Lichtgeschwindigkeit in einen Abstand um.

Der dargestellte einstrahlige Sensor 10 ist nur als Beispiel zu verstehen. Eine Erweiterung des Überwachungsbereichs 16 ist durch Bewegen des Strahls in einem Laserscanner möglich, sei es durch einen Drehspiegel oder einen insgesamt drehenden Messkopf mit Lichtsender 12 und/oder Lichtempfänger 22. So können mehrere einstrahlige Systeme kombiniert werden, um ein Lichtgitter mit mehreren, meist parallelen Strahlen zu bilden, welches insbesondere als tastendes Lichtgitter in jedem Strahl Entfernungen misst oder überwacht. Es kann mit den Lawinenphotodiodenelementen 24 einzeln oder gruppenweise ortsaufgelöst gemessen werden, so dass eine 3D-Kamera entsteht. Auch mobile Systeme sind denkbar, bei denen der Sensor 10 beweglich montiert ist.

Figur 2 zeigt den Lichtempfänger 22 in einer weiteren sehr schematischen Darstellung. Die Lawinenphotodiodenelemente 24 selbst bilden eine Matrix, wobei aber in anderen Ausführungsformen auch Zeilen oder sonstige Anordnungen denkbar sind. Erfindungsgemäß ist vorgesehen, dass die Empfindlichkeit des Lichtempfängers 22 lokal angepasst wird. Das ist durch eine elektronische Blende 28 dargestellt, die auf die Empfindlichkeit der Lawinenphotodiodenelemente 24 einwirkt. Die elektronische Blende 28 ist eine Ansteuerung, die wie dargestellt ein separates Bauteil sein, ebenso aber mindestens teilweise mit dem Lichtempfänger 22 und/oder der Steuer- und Auswertungseinheit 26 integriert realisiert sein kann.

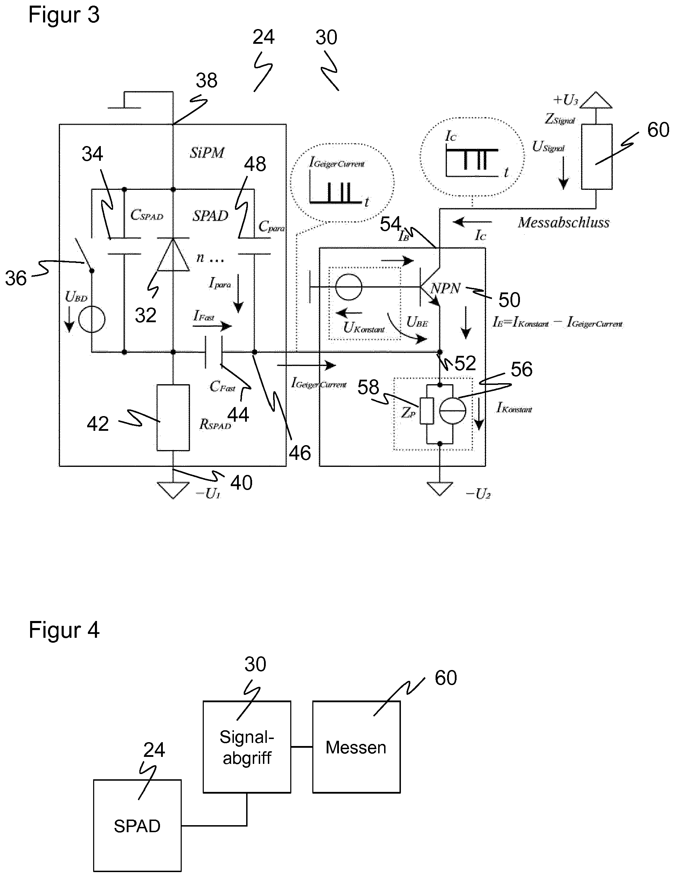

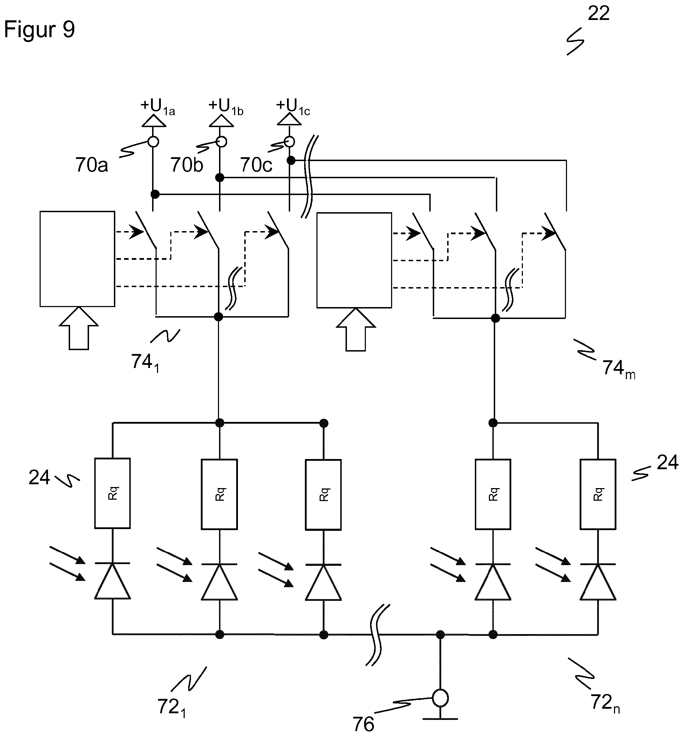

Die elektronische Blende 28 hat zwei Möglichkeiten einzuwirken, nämlich über das Auslesen des in den Lawinenphotodiodenelementen 24 erzeugten Geigerstroms oder über eine Anpassung der Vorspannung. Dadurch entsteht eine sehr flexible, lokal anpassbare Blendenwirkung, mit der Bereiche des Lichtempfängers 22 wie durch eine undurchsichtige optische Blende praktisch deaktiviert beziehungsweise wie durch eine halbtransparente Blende oder ein optisches Filter die Empfindlichkeit herab- oder heraufgesetzt wird. Beide Möglichkeiten der Einflussnahme werden nun unter Bezugnahme auf die Figuren 3 bis 8 beziehungsweise die Figuren 9 bis 11 erläutert.

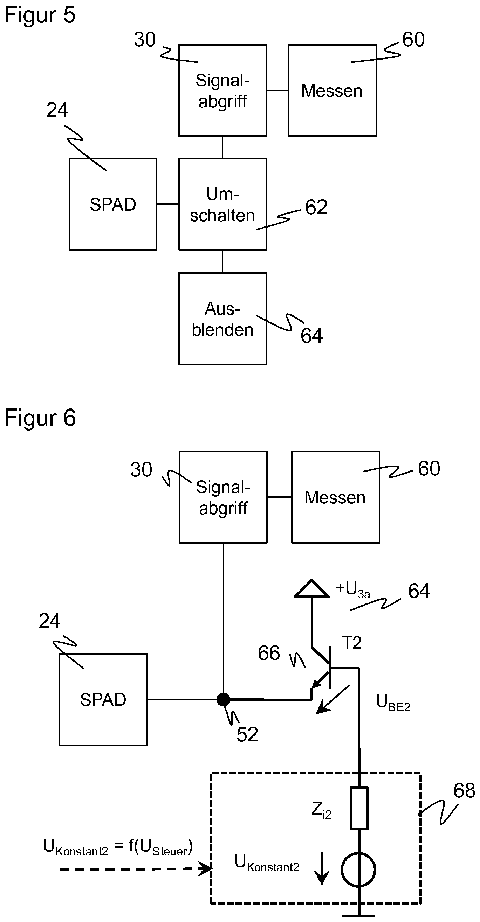

Figur 3 zeigt als Ausgangspunkt eine Darstellung eines Lawinenphotodiodenelements 24 mit einer Signalabgriffschaltung 30, die für Empfindlichkeit und Bandbreite optimiert ist. Die im Anschluss unter Bezugnahme auf die Figuren 5 bis 8 erläuterte Ausleseschaltung kann zwar auch ohne die besondere Signalabgriffschaltung 30 verwendet werden, ist jedoch vorzugsweise eine Ergänzung davon.

Das Lawinenphotodiodenelement 24 ist als Ersatzschaltbild gezeigt. Der eigentliche Aufbau des Halbleiterbauteils wird als bekannt vorausgesetzt und nicht dargestellt. Ein entsprechendes Bauelement kann beispielsweise in einem CMOS-Prozess hergestellt werden. Die Durchbruchspannung der Lawinenphotodiodenelemente 24 ist deutlich geringer als bei herkömmlichen Lawinenphotodioden, beträgt beispielsweise höchstens 50V oder 30V.

Das Lawinenphotodiodenelement 24 zeigt zum einen das Verhalten einer Diode 32. Es hat außerdem eine Kapazität, die durch den parallel geschalteten Kondensator 34 repräsentiert wird. Ein Lawinendurchbruch wird durch mindestens ein auftreffendes Photon ausgelöst, wobei dieser Vorgang wie ein Schalter 36 wirkt. Im Bereitschaftszustand liegt über der Diode 32 zwischen einem Anschluss 38 und einem Anschluss 40 eine Spannung oberhalb der Durchbruchspannung. Erzeugt dann ein einfallendes Photon ein Ladungsträgerpaar, so schließt dies gleichsam den Schalter 36, so dass das Lawinenphotodiodenelement 24 mit Ladungsträgern geflutet wird und ein sogenannter Geigerstrom fließt. Neue Ladungsträger entstehen aber nur, solange das elektrische Feld stark genug bleibt. Wird der Kondensator 34 so weit entladen, dass die Durchbruchspannung unterschritten ist, so kommt die Lawine von selbst zum Erliegen ("passive quenching"). Danach wird der Kondensator 34 aus den Anschlüssen 38, 40 über einen Widerstand 42 aufgeladen, bis wieder eine Spannung über der Durchbruchspannung an der Diode 32 anliegt. Es gibt alternative Ausgestaltungen, in denen die Lawine von außen erkannt und daraufhin eine Entladung unter die Durchbruchspannung ausgelöst wird ("active quenching").

Während der Lawine steigt das Ausgangssignal rapide und unabhängig von der Intensität des auslösenden Lichts auf einen Maximalwert an und fällt dann nach dem Löschen der Lawine wieder ab. Die Zeitkonstante des Abfalls, welche eine Totzeit des Lawinenphotodiodenelements 24 angibt, liegt typischerweise im Bereich einiger bis einiger zehn Nanosekunden. Die Totzeit ist keine absolute Totzeit, denn sobald die Vorspannung groß genug ist, um eine Lawine zu unterstützen, kann das Ausgangssignal auch wieder ansteigen, allerdings nicht im gleichen Maße wie aus dem Bereitschaftszustand. Der Verstärkungsfaktor beträgt bis zu 10⁶ und ergibt sich im Wesentlichen aus der maximalen Anzahl von Ladungsträgern, die von der Lawine in dem Lawinenphotodiodenelement 24 rekrutiert werden können.

Die Funktion der Signalabgriffschaltung 30 ist, aus dem Geigerstrom während eines Lawinendurchbruchs ein Messsignal möglichst unter Ausnutzung des vollen Stromflusses abzuleiten, und zwar so, dass auch hochfrequente Anteile erhalten bleiben und ein hohes Signal/Rausch-Verhältnis erreicht wird. Die Signalauskopplung erfolgt vorzugsweise kapazitiv über einen Koppelkondensator 44. In der dargestellten Ausführungsform weist das Lawinenphotodiodenelement 24 einen eigenen Anschluss 46 zum Auslesen eines Messsignals aus, wobei dieser Anschluss 46 über den Koppelkondensator 44 verbunden ist. Es sind auch Lawinenphotodiodenelemente 24 denkbar, die den eigenen Anschluss 46 nicht aufweisen. Dann übernimmt einer der Anschlüsse 38, 40 dessen Funktion mit, und vorzugsweise ist ein Kondensator parallel zu dem Widerstand 42 für ein verbessertes Hochfrequenzverhalten vorgesehen.

In einem Lichtempfänger ist vorzugsweise eine Vielzahl von Lawinenphotodiodenelementen 24 vorgesehen. Dazu kann die gesamte Anordnung gemäß Figur 3 vervielfacht werden, jedes Lawinenphotodiodenelement 24 also seine eigene Signalabgriffschaltung 30 mitbringen. Alternativ werden Lawinenphotodiodenelemente 24 zu Gruppen zusammengefasst und gemeinsam ausgelesen. Derartige in Figur 3 nicht dargestellte weitere Lawinenphotodiodenelemente bilden aus Sicht des gezeigten Lawinenphotodiodenelements 24 parasitäre Kapazitäten 48, die durch sonstige parasitäre Effekte noch erhöht sein können. Die parasitäre Kapazität 48 summiert sich aus den in praktischen Anwendungen meist zahlreichen weiteren Lawinenphotodiodenelementen und kann deshalb deutlich größer sein als die Kapazität des zugehörigen Koppelkondensators 44. Die parasitäre Kapazität 48 verhält sich wie ein Tiefpass, der hochfrequente Signale sperrt.

Die Signalabgriffschaltung 30 soll für die Erzielung hoher Geschwindigkeiten beziehungsweise Bandbreiten einen möglichst kleinen, gleichzeitig für eine hohe Empfindlichkeit einen großen Signalwiderstand aufweisen. Um diesen widersprüchlichen Anforderungen gerecht zu werden, nutzt die Signalabgriffschaltung 30 eine aktive Schaltungslösung mit einem aktiven Kopplungselement 50, das in Figur 3 als bipolarer NPN-Transistor in Basisschaltung ausgebildet ist. Andere aktive Elemente, insbesondere andere Transistoren (FET), eine andere Polarität (PNP) oder eine andere Verschaltung (Emitterschaltung) sind denkbar. Außerdem können statt einer einstufigen Schaltung auch mehrere Transistoren eingesetzt werden.

Das aktive Kopplungselement 50 hat nun mehrere erhebliche Vorteile für den Signalabgriff. Zum einen bietet es für den kapazitiv als Strompuls ausgekoppelten Geigerstrom praktisch keinen Widerstand, bildet also einen virtuellen Kurzschluss. Das wird praktisch nicht ganz erreicht, aber weniger als ein Ohm ist durchaus möglich. Dies führt dazu, dass es über der parasitären Kapazität 48 trotz der Lawine keine relevanten Spannungsänderungen und damit dort keine Umladevorgänge und keinen Stromfluss gibt. Dem aktiven Kopplungselement 50 steht daher eingangsseitig nahezu der gesamte durch den Koppelkondensator 44 fließende Geigerstrom zur Verfügung. Ohne den virtuellen Kurzschluss würden dagegen deutlich spürbare Anteile des Geigerstroms in der parasitären Kapazität 48 verloren gehen, und vor allem die schnellen, hochfrequenten Signalanteile durch das Tiefpassverhalten unterdrückt.

Zum zweiten erzeugt das aktive Kopplungselement 50 ausgangsseitig einen Messstrom, der in seinem zeitlichen Verlauf und Pegel dem Geigerstrom entspricht. Dabei kann das aktive Kopplungselement 50 den Messstrom durch seine Übertragungsfunktion auch gegenüber dem Geigerstrom gezielt verändern um hierdurch die nutzbare Signalabgriffleistung zu verstärken. Es steht dafür an dem Kopplungselement 50 nahezu der vollständige Strom des Lawinendurchbruchs zur Verfügung. Der Messstrom ist anschließend ausgangsseitig als Detektionsergebnis zur Weiterverarbeitung abgreifbar. Der Messstrom speist sich aus einer Stromquelle des aktiven Kopplungselements 50 und nicht aus dem Lawinenphotodiodenelement 24.

Dabei sind zum dritten Eingangskreis und Ausgangkreis voneinander entkoppelt. Die Weiterverarbeitung des Messstroms hat also, in den technischen Grenzen einer realen Entkopplung, keinerlei Auswirkungen auf den Geigerstrom. Deshalb sind praktisch beliebige Nachfolgestufen möglich, die anders als herkömmliche Signalabgriffe keine ungünstigen Rückwirkungen auf den Geigerstrom haben.

Im konkreten Beispiel der Figur 3 bildet der Emitter des aktiven Kopplungselements 50 den Eingang 52, dem von dem Anschluss 46 des Lawinenphotodiodenelements 24 der Geigerstrom zugeführt wird. Die Basis ist mit Masse oder allgemeiner einem festen Potential verbunden und damit virtuell kurzgeschlossen. Der Kollektor bildet den Ausgang 54, an dem der Messstrom bereitgestellt wird. Im Emitterkreis des Transistors befindet sich noch eine Konstantstromquelle 56 zwischen Eingang 52 und einer Versorgungsspannung -U₂. Dadurch fließt hier zu Zeiten außerhalb von Lawinendurchbrüchen ein Gleichstrom, der den Arbeitspunkt des Transistors einstellt. Die Konstantstromquelle 56 kann alternativ passiv durch einen Widerstand 58 realisiert sein oder als Kombination aus beidem, wie in Figur 3 gezeigt. Am Ausgang 54 wird der Messstrom abgegriffen. Als rein beispielhafte Umsetzung des dafür zuständigen Messpfades 60 ist hier eine einfache lineare Messimpedanz dargestellt. Der Messpfad 60 kann alternativ beliebige Messschaltungen mit aktiven und/oder passiven Elemente aufweisen. Durch die Entkopplung mittels der Signalabgriffschaltung 30 haben diese Messschaltungen im Messpfad 60 praktisch keine Rückwirkung auf die eigentliche Messung.

Figur 4 zeigt die Schaltungsanordnung der Figur 3 für einen hochempfindlichen Detektor hoher Bandbreite nochmals in einem ganz groben Blockdiagramm, in dem das mit SPAD bezeichnete Lawinenphotodiodenelement 24, die Signalabgriffschaltung 30 und der Messpfad 60 jeweils nur durch einen Funktionsblock repräsentiert ist. Dadurch soll das Verständnis für die nun zu erläuternde ergänzende Ausleseschaltung erleichtert werden.

Figur 5 zeigt zunächst ein Blockdiagramm, mit dem die bisherige einzige Ausgangssignalleitung des Messpfades 60 für ein einziges Ausgangssignal erweitert wird. An das Lawinenphotodiodenelement 24 wird ein Schalterelement 62 angeschlossen, welches den Geigerstrom aus dem Lawinenphotodiodenelement 24 wahlweise sofort in einen Ausblendungspfad 64 abführt oder wie bisher mittels der Signalabgriffschaltung 30 dem Messpfad 60 zuführt. Ein Anwendungsbeispiel hierfür ist, dass in einer ersten Gruppe von Lawinenphotodiodenelementen 24 das Schalterelement 62 mit dem Ausblendungspfad 64 und in einer zweiten Gruppe mit dem Messpfad 60 verbindet. Auf diese Weise werden die Empfangssignale der ersten Gruppe elektronisch ausgeblendet.

Figur 6 zeigt ein konkretes Schaltungsbeispiel hierzu. Ein Auslese-Transistor 66 wird mit seiner Basis an den Eingang 52 der Signalabgriffschaltung 30 angeschlossen. Das Basispotential wird über eine steuerbare Spannungsquelle 68 eingestellt. Liegt das Basispotential an dem Auslese-Transistor 66 über dem Basispotential an dem Transistor 50 der Signalabgriffschaltung 30, so geht dessen Verstärkungsfunktion verloren, was einem Ausschalten des Messpfades 60 entspricht. Der Geigerstrom wird auf den Auslese-Transistor 66 umgeleitet und fließt dort über den Ausblendungspfad 64 ab. Liegt umgekehrt das Basispotential an dem Transistor 50 höher, so fließt der Geigerstrom in die Signalabgriffschaltung 30 und der daraus erzeugte Messstrom in den Messpfad 60.

Da es auf das relative Verhältnis der Basispotentiale ankommt, kann die Steuerung alternativ zu der steuerbaren Spannungsquelle 68 auch über das Basispotential des Transistors 50 der Signalabgriffschaltung 30 erfolgen. Prinzipiell könnte der Ausblendungspfad 64 nicht als reiner Bypass zum Abfließen des Geigerstroms ausgestaltet sein, sondern weitere Schaltungselemente aufweisen, um Informationen über den Geigerstrom zu gewinnen.

Die Ausleseschaltung gemäß Figur 6, die auf einem einzigen Auslese-Transistor 66 beruht, ist besonders einfach. Das ist dann besonders vorteilhaft, wenn die Lawinenphotodiodenelemente 24 in kleinen Gruppen oder gar einzeln ausgelesen werden, weil dann zahlreiche Ausleseschaltungen benötigt werden.

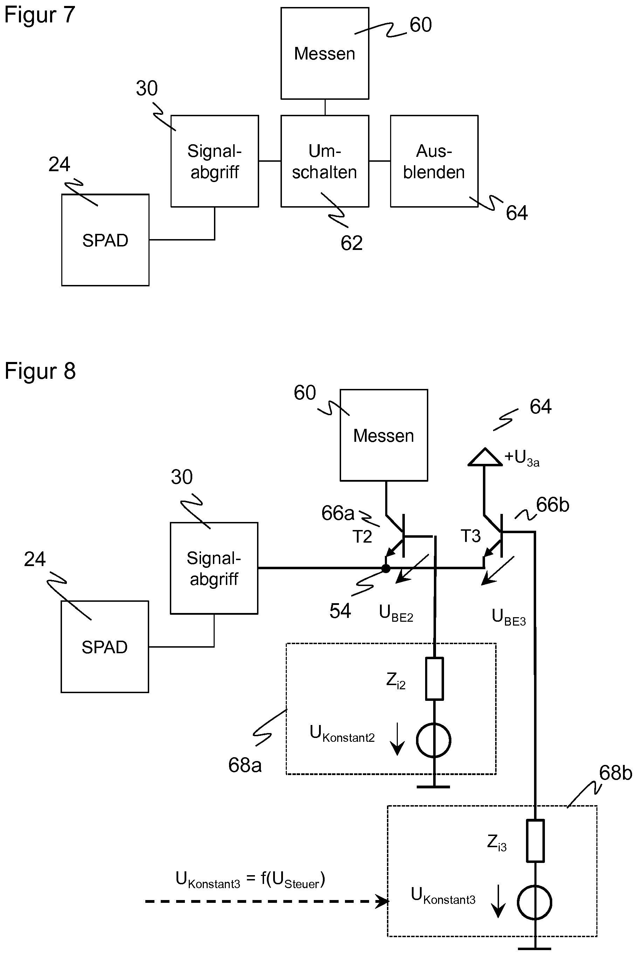

Figur 7 zeigt eine alternative Ausführungsform der Ausleseschaltung wiederum zunächst als sehr vereinfachtes Blockdiagramm. Im Unterschied zu Figur 5 ist das Schalterelement 62 zum Umschalten zwischen Messpfad 60 und Ausblendungspfad 64 hier nach der Signalabgriffschaltung 30 angeordnet. Dadurch ist die Ausleseschaltung über die Signalabgriffschaltung 30 von dem Eingang 52 und damit dem Lawinenphotodiodenelement 24 entkoppelt, stellt keine zusätzliche kapazitive Belastung und keinen zusätzlichen Einkoppelpfad für Störungen dar. Das Umschalten in dem Schalterelement 62 ist praktisch ohne Rückwirkungen, da der Eingang 52 von dem Transistor 50 aktiv auf konstantem Potential gehalten wird.

Allerdings erfordert diese Robustheit gegenüber Figur 6 eine etwas aufwändigere Schaltung, wie beispielhaft in Figur 8 dargestellt. Es sind nun zwei Auslese-Transistoren 66a-b vorgesehen, die zueinander parallel jeweils in Kaskoden-Anordnung über den Ausgang 54 an den Transistor 50 der Signalabgriffschaltung 30 angeschlossen sind. Kollektorseitig ist an dem ersten Auslese-Transistor 66a der Messpfad 60 und an dem zweiten Auslese-Transistor 66b der Ausblendungspfad 64 angeschlossen. Ein in den Messpfad 60 geleiteter Messstrom wird beispielsweise durch einen Messabschluss erfasst, während ein Messstrom in dem Ausblendungspfad 64 im Sinne einer elektronischen Blende keinen Beitrag zum Auskoppelergebnis leistet. Der Ausblendungspfad 64 muss aber alternativ, wie schon mehrfach erwähnt, kein reiner Bypass sein, in dem der Messstrom abfließt, sondern auch hier können bedarfsweise Informationen über den Messstrom erfasst werden.

Wahlweise übernimmt nun der erste Auslese-Transistor 66a oder der zweite Auslese-Transistor 66b den Messstrom, nämlich den gegebenenfalls von einem Geigerstrom geprägten Kollektorstrom des Transistors 50, in den Messpfad 60 beziehungsweise den Ausblendungspfad 64. Das hängt davon ab, welcher der Auslese-Transistoren 66a-b das höhere Basispotential aufweist, wobei hier rein beispielhaft der erste Auslese-Transistor 66a eine konstante Spannungsquelle 68a aufweist und die Steuerung über eine steuerbare Spannungsquelle 68b des zweiten Auslese-Transistors 66b erfolgt, wobei die Spannungsquellen 68a-b ebenso umgekehrt angeschlossen oder beide steuerbar ausgestaltet sein könnten.

Die Kaskodenschaltung gemäß Figur 8 ermöglicht nicht nur eine verbesserte Entkopplung zu dem Lawinenphotodiodenelement 24 mittels der Signalabgriffschaltung 30, sondern auch ein nochmals verbessertes Hochfrequenzverhalten, denn die Sperrspannungs-Anforderungen der beiden Auslese-Transistoren 66a-b sowie dies des Signalabgriffs-Transistors können herabgesetzt werden, wodurch parasitäre Größen und vor allem Kapazitäten weiter verringert werden.

Die jeweilige Kaskode kann alternativ zur Darstellung als Kombination eines Bipolar-Transistors und eines FET-Transistors oder auch als Doppel-FET-Transistor umgesetzt werden. Prinzipiell ist eine Kaskode sogar ohne Ausleseschaltung mit zwei Auslese-Transistoren 66a-b allein im Zusammenhang mit einer Signalabgriffschaltung 30 denkbar. Das wäre dann ein Beispiel für eine alternative Ausgestaltung des Messpfades 60 in Figur 3, in dem der einfache Messwiderstand durch eine aktive Schaltung ersetzt ist.

Zwischen den beiden Ausführungsformen mit einer Ausleseschaltung, die schon wie in den Figuren 5 und 6 am Eingang 52 der Signalabgriffschaltung 30 oder die wie in den Figuren 7 und 8 die Entkopplung nutzt und am Ausgang angeschlossen ist, kann nach Gesichtspunkten wie Leistungsfähigkeit, Komplexität und Kosten entschieden werden. Beiden Ausführungsformen ist gemeinsam, dass eine digitale elektronische Blende entsteht, wenn der Geigerstrom oder Messstrom in dem Ausblendungspfad 64 ohne jegliche Erfassung abfließt. Durch gezielte Arbeitspunktverschiebungen mittels Ansteuerung des Basispotentials werden Transistoren 50, 66, 66a-b vom Linear- in den Sperrbereich verschoben und damit zwischen Messpfad 60 und Ausblendungspfad 64 gewählt. Diese Vorgänge können auch sehr schnell über eine 3V Technik erfolgen. Dabei bleibt jeweils die kurzschlussnahe, niedrige Auskoppelimpedanz der Signalabgriffschaltung 30 an ihrem Eingang 52 auch im abgeblendeten Zustand erhalten, während also auf den Ausblendungspfad 64 geschaltet ist.

Figur 9 zeigt ein schematisches Schaltbild des Lichtempfängers 22, dessen Lawinenphotodiodenelemente 24 über mehrere Vorspannungsanschlüsse 40a-c unterschiedlich stark vorgespannt und dementsprechend empfindlich eingestellt werden können. Die Lawinenphotodiodenelemente 24 sind jeweils vereinfachend als Reihenschaltung einer Diode und eines Löschwiderstands dargestellt. Das ist rein beispielhaft und jede bekannte Implementierung von SPADs denkbar, insbesondere mit einem dritten kapazitiv gekoppelten Anschluss entsprechend Figur 3. Die Lawinenphotodiodenelemente 24 sind gruppenweise zusammengefasst, wobei hier nur zwei Gruppen 72₁-72ₙ gezeigt sind, obwohl in der Praxis auch eine große Anzahl von Gruppen vorhanden sein kann, bis hin zu dem Grenzfall, in dem schon einzelne Lawinenphotodiodenelemente 24 eine Gruppe bilden. Hier sind Schaltungsaufwand und Flexibilität gegeneinander abzuwägen.

Die Vorspannungsanschlüsse 70a-c sind ein Teil einer Schaltung, die es ermöglicht, die Gruppen 72₁-72ₙ mit unterschiedlichen Vorspannungen zu beaufschlagen beziehungsweise zu versorgen. Die konkrete Wahl, mit welchem der Vorspannungsanschlüsse 70a-c eine Gruppe 72₁-72ₙ verbunden ist, wird in dieser Ausführungsform in einem jeweiligen 1-aus-n-Decoder oder Umschaltelement 74₁-74ₘ getroffen. Dadurch wird jeweils eine der Vorspannungen von den Vorspannungsanschlüssen 70a-c auf die Lawinenphotodiodenelemente 24 einer Gruppe 72₁-72ₙ durchgeschaltet. Ein einfacher Mehrfachschalter als Umschaltelement 74₁-74ₘ ist rein beispielhaft und etwa auch eine binär- oder 2n-codierte Spannungsauswahl zur Reduzierung der Steuerbitanzahl denkbar. Die entsprechenden Auswahlbits können in Speicherzellen des Lichtempfängers 22 abgelegt werden, wobei dann in der maximalen Ausbaustufe mit Gruppen 72₁-72ₙ, die jeweils nur ein Lawinenphotodiodenelement 24 enthalten, individuelle Speicherregister pro Lawinenphotodiodenelement 24 vorhanden sind, wo die jeweilige zu verwendende Vorspannung abgelegt ist.

Die dargestellte Anzahl von Vorspannungsanschlüssen 70a-c und damit verfügbaren unterschiedlichen Vorspannungen ist ebenso beispielhaft wie die Anzahl der Gruppen 72₁-72ₙ. und ergibt sich aus den konkreten Anforderungen für die Anwendung des Lichtempfängers 22. In der Regel wird die Anzahl von Vorspannungsanschlüssen 70a-c aber überschaubar bleiben und in einer Größenordnung unter zehn bleiben, um den Schaltungsaufwand zu begrenzen und weil eine zu feine Abstufung der Empfindlichkeit nur noch vergleichsweise geringe Vorteile bietet, zumal ein Lawinenphotodiodenelement 24 auch bei fester Vorspannung zumindest mit einem gewissen Dynamikbereich des Empfangslichts selbst umgehen kann.

Die unterschiedlichen Vorspannungen wirken als elektronische Blende, mit der bestimmte Gruppen 72₁-72ₙ abgeschaltet oder unempfindlicher eingestellt werden können. Wie schon erwähnt, verändert die Vorspannung die Verstärkung und insbesondere bei rotempfindlichen Lawinenphotodiodenelementen 24 auch den Quantenwirkungsgrad und damit die Auslösewahrscheinlichkeit. Folglich kann über die unterschiedlichen Vorspannungen eine gewünschte inhomogene Empfindlichkeitsverteilung des Lichtempfängers 22 eingestellt werden. Dabei führt eine Vorspannung unterhalb der Durchbruchspannung praktisch zu einem Abschalten im ungleich weniger empfindlichen APD-Modus oder bei weiterem Absenken der Vorspannung bis hin zu Null sogar im PIN-Modus.

Eine Variation der Überspannung oberhalb der Durchbruchspannung bedeutet eine graduelle Änderung der Empfindlichkeit, d.h. zum Erhalt ähnlich hoher Signalwerte muss mehr Lichtleistung aufgebracht werden. Ab einer gewissen Lichtleistung stellt sich ein signalseitiger Sättigungseffekt ein, der einen Informationsverlust und ein schlechteres Signal-Rauschverhältnis durch Hintergrundeffekte (Dark Counts) mit sich bringt. Dies kann durch überlappende oder nicht überlappende unterschiedliche Empfindlichkeiten anderer Lawinenphotodiodenelemente 24 mittels unterschiedlicher Vorspannungen ausgeglichen werden.

In Figur 9 werden die Lawinenphotodioden 24 von einer Seite, hier der Kathode, mit den unterschiedlichen Vorspannungsanschlüssen 70a-c verbunden. Auf der anderen Seite, hier der Anode, ist ein gemeinsamer Anschluss 76 mit einem festen Potential vorgesehen. Diese Anordnung kann auch gespiegelt werden, wobei dann die unterschiedlichen Vorspannungen anodenseitig zur Verfügung stehen. In anderen Ausführungsformen sind sowohl anoden- als auch kathodenseitig mehrere zur Auswahl stehende Potentiale zum Einstellen von unterschiedlichen Vorspannungen vorgesehen.

In einer nicht gezeigten alternativen Ausführungsform sind keine Umschaltelemente 74₁-74ₘ vorgesehen, sondern die Gruppen 72₁-72ₙ fest auf einen der Vorspannungsanschlüsse 70a-c verschaltet. In diesem Fall gibt es effektiv nur so viele Gruppen 72₁-72ₙ wie Vorspannungsanschlüsse 70a-c, da die Zuordnung zu einer Vorspannung nicht variiert werden kann, folglich nur eine Größenordnung von zwei bis fünf, jedenfalls vorzugsweise höchstens zehn Gruppen. Die geometrische Anordnung ist per Design vorgegeben.

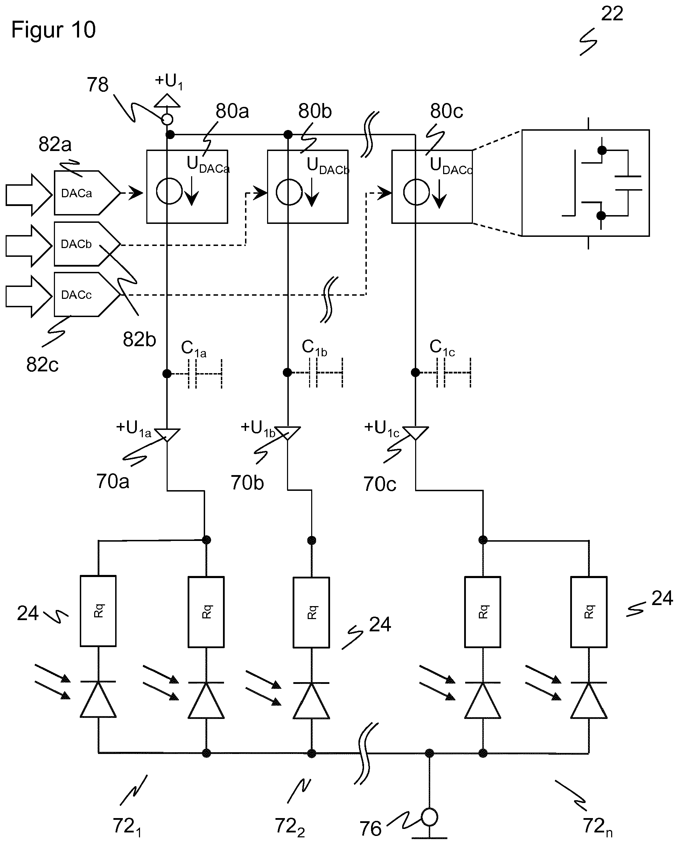

Figur 10 zeigt ein schematisches Schaltbild für eine weitere Ausführungsform zur Versorgung von Lawinenphotodiodenelementen 24 mit unterschiedlichen Vorspannungen. Auch wenn die Anzahl verschiedener Vorspannungsanschlüsse 70a-c in der Praxis begrenzt ist, bedeutet es doch einen spürbaren Schaltungsaufwand, die Vorspannungen extern bereitzustellen. Deshalb ist in Figur 10 nur noch ein einziger Anschluss 78 für eine externe Spannung vorgesehen.

Spannungsanpassungselemente 80a-c erzeugen aus der einen externen Spannung die benötigten unterschiedlichen Vorspannungen und stellen sie an den nun internen Vorspannungsanschlüssen 70a-c bereit. Vorzugsweise arbeiten die Spannungsanpassungselemente 80a-c spannungsabziehend, beispielsweise ähnlich der Funktionsweise eines Linearreglers. Dann sollte die externe Spannung einem Maximalwert für eine benötigte Vorspannung entsprechen, um genügend Reserve vorzuhalten. Prinzipiell ist aber auch denkbar, eine Spannung hinzuzufügen, etwa in Form einer Ladungspumpe.

Die Spannungsanpassungselemente 80a-c weisen eine Ansteuerung hier in Form chipinterner DA-Wandler 82a-c auf. Dadurch ist eine Vorgabe der Vorspannungen an den internen Vorspannungsanschlüssen 80a-c einstellbar, wobei die Spannungsgradierung über die Bitauflösung der DA-Wandler 82a-c und eine linear oder nichtlinear abgeleitete Differenzspannung vorgegeben ist. So lässt sich über die resultierende Vorspannung festlegen, mit welcher Empfindlichkeit die Gruppen 72₁-72ₙ je nach Überspannung arbeiten beziehungsweise ob sie mittels Vorspannung unterhalb der Durchbruchspannung praktisch abgeschaltet sind. Der Lichtempfänger 22 kann Speicherbereiche aufweisen, um dort die Ansteuerungen abzulegen. Alternativ zu einer digitalen Ansteuerung mittels der DA-Wandler 82a-c ist auch eine analoge Beeinflussung etwa durch einen Steuerstrom, eine Steuerspannung oder eine Widerstandsbeschaltung denkbar. Die gestrichelt eingezeichneten Kondensatoren C1a-C1c können zur niederimpedanten Versorgung der Lawinenphotodiodenelemente 24 erforderlich sein, insbesondere wenn die rechts oben skizzierten, meist parasitären Parallelkapazitäten der Spannungsanpassungselemente 80a-c dafür nicht ausreichen.

Figur 10 zeigt als Beispiel drei Gruppen 72₁-72ₙ von Lawinenphotodioden 24. Da die Verbindung zu den internen Vorspannungsanschlüssen 70a-c fest ist, kann es hier vorteilhaft sein, auch nicht mehr Gruppen 72₁-72ₙ als Vorspannungsanschlüssen 70a-c zu bilden. Andererseits können durchaus zusätzliche Gruppen vorhanden sein, die sich dann in anderen Eigenschaften unterscheiden, insbesondere der Verschaltung beim Auslesen, obwohl mehrere Gruppen fest mit demselben Vorspannungsanschluss 70a-c verbunden sind.

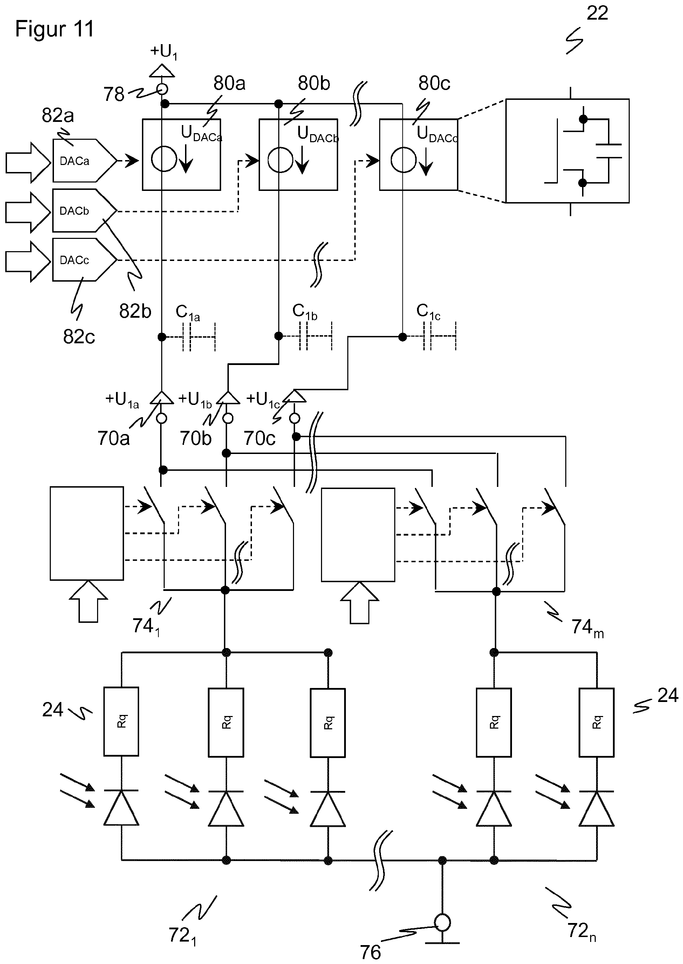

Figur 11 zeigt ein Schaltbild für eine weitere Ausführungsform zur Versorgung von Lawinenphotodiodenelementen 24 mit unterschiedlichen Vorspannungen. Dabei handelt es sich praktisch um eine Kombination der Maßnahmen, die unter Bezugnahme auf die Figuren 9 und 10 erläutert wurden. Es werden also zum einen aus einer externen Spannung an einem Anschluss 78 mittels Spannungsanpassungselementen 80a-c mehrere Vorspannungen erzeugt und an internen Vorspannungsanschlüssen 70a-c bereitgestellt. Außerdem sind Umschaltelemente 74₁-74ₘ vorgesehen, um die Gruppen 72₁-72ₙ wahlweise mit einem der Vorspannungsanschlüsse 70a-c zu verbinden.

Die in den Figuren 9 bis 11 gezeigten Schaltungselemente sind rein beispielhaft zu verstehen, und Varianten, die zu einer Figur erwähnt sind, können auch in den übrigen Ausführungsformen eingesetzt werden. Die tatsächliche Realisierung der Schaltungselemente ist nicht festgelegt und beispielsweise von dem Halbleiterprozess abhängig, in dem der Lichtempfänger 22 entsteht. Wie bereits erwähnt, können die verschiedenen Vorspannungen auch kathoden- statt wie dargestellt anodenseitig bereitgestellt werden. Die Spannungs- und Bezugspotentiale können verschoben oder umgekehrt werden.

Wie erwähnt, kann die elektronische Blende über die anhand der Figuren 3 bis 8 erläuterte Auslesesteuerung oder die anhand der Figuren 9 bis 11 erläuterte Anpassung der Vorspannung eingestellt werden, oder es werden beide Möglichkeiten genutzt.

Die Auslesesteuerung ist extrem schnell und damit besonders hochfrequenztauglich, und sie hat keine Rückwirkung auf das Verhalten in den Lawinenphotodiodenelementen 24 selbst. Dafür wirkt diese Art der elektronischen Blende praktisch erst nachträglich, kann also Vorgänge in den Lawinenphotodiodenelementen 24 und insbesondere Übersteuerungen nicht verändern. Die Auslesesteuerung arbeitet binär, aktiviert oder deaktiviert also den Effekt eines Lawinenphotodiodenelements 24 vollständig. Eine Art Grauschattierung kann dadurch erreicht werden, dass in einem Bereich des Lichtempfängers 22 ein gewisser Prozentsatz von Lawinenphotodiodenelementen 24 deaktiviert wird.

Die Vorspannung wiederum erlaubt eine analoge, graduelle Anpassung, die direkt am Eingang wirkt und daher den Dynamikumfang erweitert und auch Übersteuerungen der Lawinenphotodiodenelemente 24 verhindert. Allerdings ist nicht auszuschließen, dass sehr schnelle Änderungen der Vorspannung Rückwirkungen auf die Lawinenphotodiodenelemente 24 haben, so dass das Hochfrequenzverhalten gegenüber einer Auslesesteuerung schlechter ist. Lawinenphotodiodenelemente 24 mit aktivem Quenching werden schneller zurückgesetzt, erlangen so schneller wieder ihre volle Empfindlichkeit und erweitern den Dynamikumfang zusätzlich. Somit kann aktives Quenching insbesondere das Hochfrequenzverhalten bei Vorspannungsanpassungen verbessern.

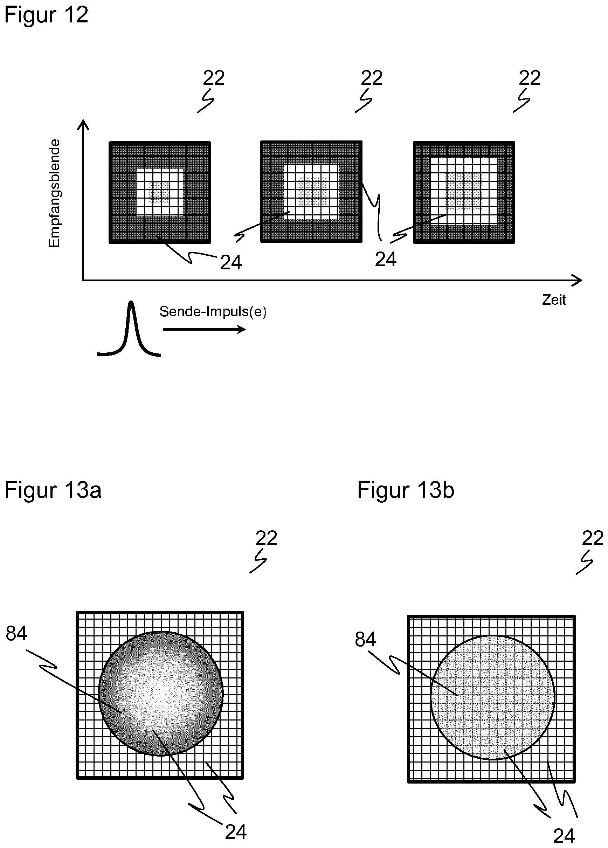

Figur 12 zeigt ein Anwendungsbeispiel mit einer abstandsabhängigen Anpassung der elektronischen Blende 28. Die Illustration ist von der Vorstellung eines Sensors 10 geleitet, der mit einem pulsbasierten Lichtlaufzeitverfahren den Abstand zu einem Objekt 18 misst. Trifft das ausgesandte Lichtsignal 14 auf das Objekt 18, so erzeugt das remittierte Lichtsignal 20 auf dem Lichtempfänger 22 einen Lichtfleck. Dessen Größe und je nach optischer Auslegung des Sensors 10 auch Position hängt davon ab, welchen Abstand das Objekt 18 hat. Da sich das Lichtsignal 14 mit der konstanten Lichtgeschwindigkeit ausbreitet, kann der Sensor 10 zu jedem Zeitpunkt nur ein remittiertes Lichtsignal 20 aus einem bekannten, mit der Lichtgeschwindigkeit anwachsenden Abstand empfangen. Wegen des Hin- und Rückwegs von Lichtsignal 14 und remittiertem Lichtsignal 20 wächst der Abstand genaugenommen mit halber Lichtgeschwindigkeit

Die elektronische Blende 28 passt sich dieser Erwartung an Größe und Position, gegebenenfalls auch Form des Lichtflecks an. Wie in Figur 12 illustriert, wird zum Sendezeitpunkt nur ein kleinerer, weiß dargestellter Anteil der Lawinenphotodiodenelemente 24 aktiviert. Die umgebenden, schwarz dargestellten Lawinenphotodiodenelemente 24 würden nur Störereignisse beitragen und sind daher ausgeblendet oder deaktiviert. Der Anteil der aktiven Lawinenphotodiodenelemente 24 wird dann sukzessive größer, um sich dem größeren Lichtfleck bei Empfang eines remittierten Lichtsignals 20 eines ferneren Objekts 18 anzupassen. Diese Anpassung kann kontinuierlich sein. Da die jeweiligen Anpassungen der elektronischen Blende 28 nicht ohne Rückwirkungen instantan erfolgen, ist auch eine stufenweise Anpassung denkbar, beispielsweise wie dargestellt in drei Stufen für einen nahen, mittleren und fernen Abstandsbereich.

Die elektronische Blende 28 ist zunächst schwarz-weiß und damit binär dargestellt. Anstelle einer vollständigen Aktivierung oder Deaktivierung ist auch eine graduelle Anpassung möglich, die in Übergangsbereichen oder insgesamt die Empfindlichkeit nur reduziert. Außerdem kann im aktiven inneren Bereich der elektronischen Blende 28 eine Graduierung erfolgen, die etwa einen besonders hellen Mittenbereich etwas abschwächt. Das ist in Figur 12 durch grau dargestellte Lawinenphotodiodenelemente 24 angedeutet, wobei auch diese Anpassung eine graduelle Ortsverteilung aufweisen beziehungsweise abstandsabhängig sein kann. Im optischen Bereich würde man dabei eher von einem Transmissions- oder Dämpfungsfilter sprechen, aber hier werden weiterhin die vollständigen wie die teilweisen Abschattungseffekte als elektronische Blende 28 bezeichnet. Selbstverständlich sind die einfachen rechteckigen Geometrien der elektronischen Blende 28 der Figur 12 nur schematisch. In der Realität erfolgt vorzugsweise eine auch abstandsabhängige Anpassung an eine erwartete oder gemessene Form des Lichtflecks.

Eine elektronische Blende 28 muss nicht wie bisher erläutert in dem schnellen zeitlichen Bezug zu einem ausgesandten Lichtsignal 14 abstandsabhängig angepasst werden. Der Abstandswert kann auch durch eine frühere Messung bekannt sein, insbesondere durch Iteration, in der Abstandsmessung und elektronische Blende 28 sukzessive immer genauer gemessen beziehungsweise auf ein Objekt 18 eingestellt werden. Weitere Alternativen sind lediglich eine Schätzung eines relevanten Abstandsbereichs, oder der Sensor 10 ist auf einen bestimmten Abstand eingestellt. In allen diesen Fällen kann die elektronische Blende 28 analog der Darstellung in Figur 12 auf den erwarteten Lichtfleck in einem bestimmten Abstand oder Abstandsbereich eingestellt werden.

Im Gegensatz zu optischen Blenden oder Filtern lässt sich die elektronische Blende 28 mit praktisch beliebigen Abblend- und Abdunklungsmustern ansteuern, die teilweise auf mechanischer Ebene gar nicht möglich wären. Es muss lediglich die Ansteuerung möglich sein, was wiederum mit der Definition der Gruppen 72₁-72ₙ zusammenhängt, die aber bei Bedarf bis auf die Ebene von einzelnen Lawinenphotodiodenelementen 24 hinuntergehen kann. Dadurch kann effektiv ein unerwünschter Signalbeitrag von Fremd- und Streulicht von den in der jeweiligen Situation nicht benötigten Gruppen 72₁-72ₙ ferngehalten werden, beziehungsweise von Nutzlicht überstrahlte Gruppen 72₁-72ₙ werden gezielt deaktiviert. Die Blendenwirkung ist hier rein digital und in der Funktion somit ähnlich die der Pupille des menschlichen Auges. Dabei ist nicht nur ein digitales Abblenden durch Aktivieren und Deaktivieren, sondern auch eine Empfindlichkeitsbeeinflussung möglich, um einen optimalen Arbeitspunkt für jede Gruppe 72₁-72ₙ zu setzen.

Figur 13 illustriert eine weitere Ausführungsform der elektronischen Blende 28, die wie ein Transmissionsfilter wirkt. Die Abhängigkeit ist nicht abstandsabhängig wie in Figur 12, was nicht ausschließt, den nun zu beschreibenden Abschwächungseffekt mit einer abstandsabhängigen elektronischen Blende 28 zu kombinieren.

In einer einfachen Realisierung passt die elektronische Blende 28 die Empfindlichkeit überall, also skalar und vergleichbar einer Sonnenbrille an. Dazu wird die Intensität des einfallenden Lichts gemessen oder geschätzt. Der Lichtempfänger lässt sich durch die Empfindlichkeitsanpassung optimal aussteuern.

In einer etwas komplexeren Ausführungsform wird die Empfindlichkeit lokal an die Intensitätsverteilung des einfallenden Lichts angepasst. Figur 13a ist eine beispielhafte Darstellung eines Lichtflecks 84 mit inhomogener Intensitätsverteilung. Der Lichtfleck 84 ist in diesem Beispiel in der Mitte deutlich heller als an den Rändern. Indem die Empfindlichkeit invers zu dieser Intensitätsverteilung angepasst wird, kann der Lichtfleck 84 homogenisiert werden. Das zeigt die Darstellung der Figur 13b. Die Empfindlichkeitsanpassung muss keineswegs in einem genauen mathematischen Sinne die Intensitätsverteilung invertieren. Oft genügt es, die besonders hellen Bereiche etwas abzuschwächen. Andererseits ist die mögliche Genauigkeit der Anpassung nur durch die Größe der Gruppen 72₁-72ₙ begrenzt. Die Empfindlichkeitsanpassung wird vorzugsweise mit einer undurchsichtigen Blende um den Lichtfleck 84 herum kombiniert, d.h. die schwarz dargestellten Lawinenphotodiodenelemente 24 außerhalb des Lichtflecks 84 werden deaktiviert. Eine örtliche Empfindlichkeitsanpassung beispielsweise an die Intensitätsverteilung des einfallenden Lichts kann mit einer zeitlichen oder abstandsabhängigen Anpassung kombiniert werden.

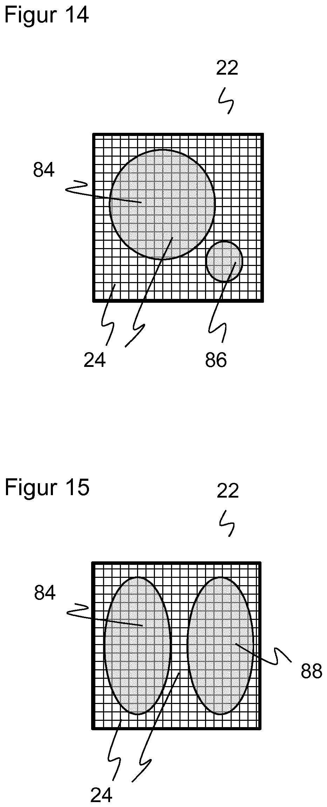

Figur 14 zeigt eine weitere Ausführungsform der elektronischen Blende 28, die nun an zwei Lichtflecken 84, 86 angepasst ist. Zu dem Lichtfleck 84, der für die eigentliche Messung beispielsweise des remittierten Lichtsignals 20 vorgesehen ist, kommt hier noch ein Referenzlichtfleck 86. Damit erfolgt beispielsweise in einer Art optischem Kurzschluss eine Referenzmessung, welche Effekte wie Verzögerungen des Lichtsenders 12, Schwankungen des ausgesandten Lichtsignals 14 oder mit Prozess, Temperatur und Spannung veränderliche elektronische Verzögerungen berücksichtigt.

Figur 15 verallgemeinert einen dedizierten Referenzlichtfleck 86 auf einen beliebigen zweiten Lichtfleck 88 eines zweiten Messkanals. Eine Erweiterung auf weitere Mess- und Referenzkanäle durch mehr Lichtflecken ist auch vorstellbar. Es gibt zahlreiche Anwendungen für eine mehrkanalige Messung. Neben einer Referenzmessung für ein Lichtlaufzeitverfahren können die beiden Kanäle dazu dienen, die elektronische Blende 28 zu optimieren, sei es mit einem dedizierten Kanal für Vorinformationen und einem dedizierten Messkanal oder in abwechselnder Funktion beider Kanäle. Eine echte mehrkanalige Messung kann dazu dienen, unterschiedliche physikalische Eigenschaften wie mehrere Wellenlängen mehrerer Sender abzudecken, aber auch eine redundante Messung für höhere Messgenauigkeit oder eine erhöhte Ausfallsicherheit und Fehleraufdeckung ermöglichen. Die elektronische Blende 28 lässt sich in allen diesen Fällen optimal auf die Messkanäle anpassen und unterdrückt störende Ereignisse von Lawinenphotodiodenelementen 24, die an der Messung von Nutzlicht nicht beteiligt sind.

Alle jeweils benötigten Einstellungen der elektronischen Blende 28 können schon im Produktionsprozess beispielsweise in Form von Lookup-Tabellen (LUT) eingelernt werden. Das Einlernen solcher Tabellen oder anderer Einstellinformationen kann systematisch oder auch geräte-individuell im Produktionsprozess erfolgen, vorzugsweise unter definierten Betriebs- beziehungsweise Umgebungsbedingungen. Weitere Möglichkeiten sind ein Einlernen bei der Inbetriebnahme eines Sensors 10 oder ein dynamisches Anpassen unter Ausnutzen der jeweiligen Messinformation des Lichtempfängers 22 im Betrieb. Dabei lassen sich die notwendigen ortsbezogenen Informationen über das Empfangslicht auf der gesamten Fläche des Lichtempfängers 22 durch sequenzielles Aktivieren der einzelnen Gruppen 72₁-72ₙ insbesondere auch in Abhängigkeit von dem jeweiligen Abstand des Objekts 18, unterschiedlichen Objektremissionen oder Erfassungswinkeln ermitteln.

Im Vergleich zu einer herkömmlichen optomechanischen Blende ist die elektronische Blende 28 einschließlich einer in diesem Begriff umfassten elektronischen Transmissionsbefilterung direkt in den Lichtempfänger 22 integriert auf einer gleichen Ebene wie die lichtempfindlichen Flächen. Damit entfallen zusätzlich unerwünschte winkelabhängige, parallaktische Abschattungseffekte herkömmlicher optischer Elemente, die zwangsläufig nur in einem gewissen Abstand angeordnet werden können.

## Patentansprüche

1. Lichtempfänger (22) mit einer Vielzahl von Lawinenphotodiodenelementen (24), die jeweils mit einer Vorspannung oberhalb einer Durchbruchspannung vorgespannt und somit in einem Geiger-Modus betrieben sind, um bei Lichtempfang einen Geigerstrom auszulösen, wobei die Lawinenphotodiodenelemente (24) mehrere Gruppen (72₁-72ₙ) bilden, und wobei der Lichtempfänger (22) mehrere Vorspannungsanschlüsse (70a-c), um die Lawinenphotodiodenelemente (24) einer Gruppe (72₁-72ₙ) jeweils mit einer Vorspannung zu versorgen, und/oder eine Vielzahl von Ausleseschaltungen (60, 62, 64) aufweist, die jeweils einer Gruppe (72₁-72ₙ) von Lawinenphotodiodenelementen (24) zugeordnet sind, **gekennzeichnet durch** eine elektronische Blendeneinheit (28), die dafür ausgebildet ist, eine lokale Empfindlichkeitsverteilung des Lichtempfängers (22) an eine beliebige Intensitätsverteilung von auf dem Lichtempfänger (22) auftreffendem Empfangslicht anzupassen, indem die Empfindlichkeit von Lawinenphotodiodenelementen (24) durch unterschiedliche Vorspannungen der Vorspannungsanschlüsse (40a-c) und/oder mittels eines Schalterelements (62) durch Umschalten des Geigerstroms in einen Messpfad (60) oder in einen Ausblendungspfad (64) der jeweiligen Ausleseschaltung (60, 62, 64) eingestellt wird

2. Lichtempfänger (22) nach Anspruch 1,
wobei die elektronische Blendeneinheit (28) dafür ausgebildet ist, Bereiche des Lichtempfängers (22) zu aktivieren oder zu deaktivieren.

3. Lichtempfänger (22) nach Anspruch 1 oder 2,
wobei die elektronische Blendeneinheit (28) dafür ausgebildet ist, in einem Bereich eines Lichtflecks (84) auf dem Lichtempfänger (22) eine hohe Empfindlichkeit und den übrigen Lichtempfänger (22) unempfindlich einzustellen.

4. Lichtempfänger (22) nach Anspruch 3,
wobei die elektronische Blendeneinheit (28) dafür ausgebildet ist, die Größe und/oder Position des Bereichs des Lichtflecks (84) an einen Abstand eines Objekts (18) anzupassen.

5. Lichtempfänger (22) nach Anspruch 3 oder 4,
wobei die elektronische Blendeneinheit (28) dafür ausgebildet ist, die Größe und/oder Position dynamisch in Abhängigkeit von der Ausbreitungsgeschwindigkeit von Licht anzupassen.

6. Lichtempfänger (22) nach einem der vorhergehenden Ansprüche,
wobei die elektronische Blendeneinheit (28) dafür ausgebildet ist, die Empfindlichkeit invers zu der Intensitätsverteilung anzupassen.

7. Lichtempfänger (22) nach einem der Ansprüche 1 bis 5,
wobei die elektronische Blendeneinheit (28) dafür ausgebildet ist, in mehreren voneinander separierten Bereichen (84, 86, 88) auf dem Lichtempfänger (22) eine hohe Empfindlichkeit einzustellen.

8. Lichtempfänger (22) nach Anspruch 7,
wobei die elektronische Blendeneinheit (28) dafür ausgebildet ist, aus Empfangslicht in einem separierten (84) Bereich gewonnene Information zur Einstellung der Empfindlichkeit in einem anderen separierten Bereich (88) zu nutzen.

9. Optoelektronischer Sensor (10) mit mindestens einem Lichtempfänger (22) nach einem der vorhergehenden Ansprüche, wobei der Sensor (10) zur Entfernungsmessung und/oder als Codeleser und/oder zur Datenübertragung ausgebildet ist.

10. Sensor (10) nach Anspruch 9,
der ein entfernungsmessender Sensor (10) mit einem Lichtsender (12) zum Aussenden eines Lichtsignals und mit einer Steuer- und Auswertungseinheit (26) ist, die dafür ausgebildet ist, aus einer Lichtlaufzeit zwischen Aussenden des Lichtsignals und Empfangen des von dem Objekt (18) aus dem Überwachungsbereich (16) remittierten Lichtsignals einen Abstand des Objekts (18) zu bestimmen.

11. Verfahren zum Erfassen von Licht mit einem Lichtempfänger (22) mit einer Vielzahl von Lawinenphotodiodenelementen (24), die jeweils mit einer Vorspannung oberhalb einer Durchbruchspannung vorgespannt und somit in einem Geiger-Modus betrieben werden, um bei Lichtempfang einen Geigerstrom auszulösen, wobei die Lawinenphotodiodenelemente (24) mehrere Gruppen (72₁-72ₙ) bilden, wobei die Lawinenphotodiodenelemente (24) über mehrere Vorspannungsanschlüsse (70a-c) mit einer jeweiligen Vorspannung versorgt werden und der Geigerstrom der Lawinenphotodiodenelemente (24) einer Gruppe (72₁-72ₙ) oder ein dem Geigerstrom entsprechender Messstrom ausgelesen wird
**dadurch gekennzeichnet,**
**dass** mittels einer elektronischen Blendeneinheit (28) eine lokale Empfindlichkeitsverteilung des Lichtempfängers (22) an eine beliebige Intensitätsverteilung von auf dem Lichtempfänger (22) auftreffendem Empfangslicht angepasst wird, indem zur Einstellung der Empfindlichkeit von Lawinenphotodiodenelemente (24) die Lawinenphotodiodenelemente (24) zumindest einer Gruppe (72₁-72ₙ) von ihrem Vorspannungsanschluss (70a-c) mit einer anderen Vorspannung versorgt werden als die Lawinenphotodiodenelemente (24) einer anderen Gruppe (72₁-72ₙ) und/oder der Geigerstrom oder der Messstrom mittels Umschalten eines Schalterelements (62) wahlweise einem Messpfad (60) oder einem Ausblendungspfad (64) zugeführt wird.

## Claims

1. A light receiver (22) having a plurality of avalanche photodiode elements (24) biased with a bias voltage above a breakdown voltage and thus operated in a Geiger mode in order to trigger a Geiger current upon light reception, wherein the avalanche photodiode elements (24) form a plurality of groups (72₁-72ₙ), and wherein the light receiver (22) comprises
a plurality of bias voltage terminals (70a-c) for supplying the avalanche photo diode elements (24) of a group (72₁-72ₙ) with a respective bias voltage and/or a plurality of readout circuits (60, 62, 64) which are associated with a group (72₁-72ₙ) of avalanche photodiode elements (24),
**characterized by** an electronic aperture unit (28) configured to adapt a local sensitivity distribution of the light receiver (22) to an arbitrary intensity distribution of reception light impinging on the light receiver (22) in that the sensitivity of avalanche photodiode elements (24) is adapted by different bias voltages of the bias voltage terminals (70a-c) and/or by means of a switching element (62) switching the Geiger current to a measurement path (60) or to a blanking path (64) of the respective readout circuit (60, 62, 64).

2. The light receiver (22) according to claim 2,
wherein the electronic aperture unit (28) is configured to activate or deactivate regions of the light receiver (22).

3. The light receiver (22) according to claim 1 or 2,
wherein the electronic aperture unit (28) is configured to set a high sensitivity in a region of a light spot (84) on the light receiver (22), and to set the remaining light receiver (22) insensitive.

4. The light receiver (22) according to claim 3,
wherein the electronic aperture unit (28) is configured to adjust the size and/or position of the region of the light spot (84) to a distance of an object (18).

5. The light receiver (22) according to claim 3 or 4,
wherein the electronic aperture unit (28) is adapted to adjust the size and/or position dynamically in dependence on the propagation speed of light.

6. The light receiver (22) according to any of the preceding claims,
wherein the electronic aperture unit (28) is adapted to adjust the sensitivity inversely to the intensity distribution.

7. The light receiver (22) according to any of claims 1 to 5,
wherein the electronic aperture unit (28) is configured to set a high intensity in a plurality of mutually separated regions (84, 86, 88) on the light receiver (22).

8. The light receiver (22) according to claim 7,
wherein the electronic aperture unit (28) is configured to use information obtained in a separated region (84) to adjust the sensitivity in another separated region (88).

9. An optoelectronic sensor (10) comprising at least one light receiver (22) according to any of the preceding claims, the sensor (10) being configured for distance measurement and/or as a code reader and/or for data transmission.

10. The sensor (10) according to claim 9,
the sensor (10) being a distance-measuring sensor (10) having a light transmitter (12) for transmitting a light signal and a control and evaluation unit (26) configured to determine a distance of the object (18) from a light time of flight between transmission of the light signal and reception of the remitted light signal remitted by an object (18) in the monitoring area (16).

11. A method for detecting light with a light receiver (22) having a plurality of avalanche photodiode elements (24) which are biased with a bias voltage above a breakdown voltage and thus operated in a Geiger mode in order to trigger a Geiger current upon light reception, wherein the avalanche photodiode elements (24) form a plurality of groups (72₁-72ₙ), wherein the avalanche photodiode elements (24) are supplied with a respective bias voltage by a plurality of bias voltage terminals (70a-c) and the Geiger current of the avalanche photodiode elements (24) of a group (72₁-72ₙ) or a measuring current corresponding to the Geiger current is read out,
**characterized in that**, by means of an electronic aperture unit (28), a local sensitivity distribution of the light receiver (22) is adapted to an arbitrary intensity distribution of reception light impinging on the light receiver (22) **in that** for adapting the sensitivity of the avalanche photodiode elements (24) the avalanche photodiode elements (24) of at least one group (72₁-72ₙ) are supplied from their bias voltage terminal (70a-c) with a different bias voltage than the avalanche photodiode elements (24) of another group (72₁-72ₙ) and/or the Geiger current or the measurement current is selectively supplied to a measurement path (60) or a blanking path (64) by switching a switching element (62).

## Revendications

1. Récepteur de lumière (22) comportant une multitude d'éléments formant photodiodes à avalanche (24) qui sont polarisés chacun avec une tension de polarisation supérieure à une tension de claquage et qui fonctionnent donc en mode Geiger, afin de déclencher un courant Geiger lors de la réception de lumière, les éléments formant photodiodes à avalanche (24) constituant plusieurs groupes (72₁ - 72ₙ) et le récepteur de lumière (22) comprenant plusieurs bornes de tension de polarisation (70a - c) pour alimenter les éléments formant photodiodes à avalanche (24) respectifs d'un groupe (72₁ - 72ₙ) avec une tension de polarisation, et/ou comprenant une multitude de circuits de lecture (60, 62, 64) qui sont associés chacun à un groupe (72₁ - 72ₙ) d'éléments formant photodiodes à avalanche (24), **caractérisé par**
un ensemble obturateur électronique (28) qui est réalisé pour adapter une répartition locale de la sensibilité du récepteur de lumière (22) à une répartition d'intensité quelconque de la lumière de réception incidente sur le récepteur de lumière (22), du fait que la sensibilité des éléments formant photodiodes à avalanche (24) est réglée par différentes tensions de polarisation des bornes de tension de polarisation (40a - c) et/ou au moyen d'un élément commutateur (62) par commutation du courant Geiger dans un trajet de mesure (60) ou dans un trajet de suppression (64) du circuit de lecture respectif (60, 62, 64).

2. Récepteur de lumière (22) selon la revendication 1,
dans lequel l'ensemble obturateur électronique (28) est réalisé pour activer ou désactiver des zones du récepteur de lumière (22).

3. Récepteur de lumière (22) selon la revendication 1 ou 2,
dans lequel l'ensemble obturateur électronique (28) est réalisé pour régler une sensibilité élevée dans une zone d'une tache de lumière (84) sur le récepteur de lumière (22) et pour régler insensible le reste du récepteur de lumière (22).

4. Récepteur de lumière (22) selon la revendication 3,
dans lequel l'ensemble obturateur électronique (28) est réalisé pour adapter la taille et/ou la position de la zone de la tache de lumière (84) à une distance d'un objet (18).

5. Récepteur de lumière (22) selon la revendication 3 ou 4,
dans lequel l'ensemble obturateur électronique (28) est réalisé pour adapter la taille et/ou la position de façon dynamique en fonction de la vitesse de propagation de lumière.

6. Récepteur de lumière (22) selon l'une des revendications précédentes,
dans lequel l'ensemble obturateur électronique (28) est réalisé pour adapter la sensibilité de façon inverse par rapport à la répartition de l'intensité.

7. Récepteur de lumière (22) selon l'une des revendications 1 à 5,
dans lequel l'ensemble obturateur électronique (28) est réalisé pour régler une sensibilité élevée dans plusieurs zones (84, 86, 88) séparées les unes des autres sur le récepteur de lumière (22).

8. Récepteur de lumière (22) selon la revendication 7,
dans lequel l'ensemble obturateur électronique (28) est réalisé pour utiliser l'information obtenue de la lumière de réception dans une zone séparée (84) pour régler la sensibilité dans une autre zone séparée (88).

9. Capteur optoélectronique (10) comportant au moins un récepteur de lumière (22) selon l'une des revendications précédentes,
dans lequel le capteur (10) est réalisé pour mesurer la distance et/ou sous forme de lecteur de code et/ou pour transmettre des données.

10. Capteur (10) selon la revendication 9,
qui est un capteur télémétrique (10) comportant un émetteur de lumière (12) pour émettre un signal lumineux et comportant une unité de commande et d'évaluation (26) qui est réalisée pour déterminer une distance de l'objet (18) à partir d'un temps de parcours de lumière entre l'émission du signal lumineux et la réception du signal lumineux réémis par l'objet (18) depuis la zone à surveiller (16).

11. Procédé pour détecter de la lumière au moyen d'un récepteur de lumière (22) comportant une multitude d'éléments formant photodiodes à avalanche (24) qui sont polarisés chacun avec une tension de polarisation supérieure à une tension de claquage et qui fonctionnent donc en mode Geiger, afin de déclencher un courant Geiger lors de la réception de lumière, les éléments formant photodiodes à avalanche (24) constituant plusieurs groupes (72₁ - 72ₙ), les éléments formant photodiodes à avalanche (24) étant alimentés avec une tension de polarisation respective par plusieurs bornes de tension de polarisation (70a - c) en lisant le courant Geiger des éléments formant photodiodes à avalanche (24) d'un groupe (72₁ - 72ₙ) ou un courant de mesure correspondant au courant Geiger,
**caractérisé en ce que**
au moyen d'un ensemble obturateur électronique (28), une répartition locale de la sensibilité du récepteur de lumière (22) est adaptée à une répartition d'intensité quelconque de la lumière de réception incidente sur le récepteur de lumière (22), du fait que pour régler la sensibilité des éléments formant photodiodes à avalanche (24), les éléments formant photodiodes à avalanche (24) d'au moins un groupe (72₁ - 72ₙ) sont alimentés par leur borne de tension de polarisation (70a - c) avec une tension de polarisation différente de celle des éléments formant photodiodes à avalanche (24) d'un autre groupe (72₁ - 72ₙ), et/ou le courant Geiger ou le courant de mesure est amené au choix à un trajet de mesure (60) ou à un trajet de suppression (64) par commutation d'un élément commutateur (62).
